# EUROPEAN PATENT SPECIFICATION

(11) **EP 4 038 829 B1**
(45) Date of publication and mention of the grant of the patent: **17.09.2025**
(21) Application number: 20789675.4
(22) Date of filing: 29.09.2020
(51) Int. Cl.: H04L 9/00, H04L 9/32

(54) **CALL-BACK MECHANISMS FOR BLOCKCHAIN TRANSACTIONS**
RÜCKRUFMECHANISMEN FÜR BLOCKCHAINTRANSAKTIONEN
MÉCANISMES DE RAPPEL POUR TRANSACTIONS DE CHAÎNE DE BLOCS

(30) Priority: 30.09.2019 GB 201914043; 21.05.2020 GB 202007597; 06.07.2020 GB 202010339
(43) Date of publication of application: 10.08.2022
(73) Proprietor: nChain Licensing AG, 6300 Zug (CH)
(72) Inventor: COUGHLAN, Steven, Cardiff CF10 2HH (GB); SRAHA, Ambrose, Cardiff CF10 2HH (GB); WEERASINHA, Dulan, Cardiff CF10 2HH (GB); MEE, Andrew, James, Cardiff CF10 2HH (GB)
(74) Representative: Murgitroyd & Company
(86) International application number: PCT/IB2020/059095
(87) International publication number: WO 2021/064565

(56) References cited:
- WO-A1-2018/229632
- US-A1- 2019 104 196
- US-A1- 2019 139 037
- MATTIAS SCHERER: "Performance and Scalability of Blockchain Networks and Smart Contracts", 19 June 2017 (2017-06-19), XP055525046, Retrieved from the Internet <URL:https://umu.diva-portal.org/smash/get/diva2:1111497/FULLTEXT01.pdf> [retrieved on 20170619]

## Description

### Technical Field

This disclosure relates generally to methods and systems for implementing a payment service or a payment interface for one or more clients. Particularly, but not limited to, the present disclosure relates to enabling secure and reliable payment transactions associated with a blockchain or distributed ledger for, or on behalf of, one or more clients , the transactions pertaining to a digital asset payment associated with a customer or a payer entity.

### Background

In this document we use the term 'blockchain' to include all forms of electronic, computer-based, distributed ledgers. These include consensus-based blockchain and transaction-chain technologies, permissioned and un-permissioned ledgers, shared ledgers, public and private blockchains, and variations thereof. The most widely known application of blockchain technology is the Bitcoin ledger, although other blockchain implementations have been proposed and developed. While Bitcoin may be referred to herein for the purpose of convenience and illustration, it should be noted that the disclosure is not limited to use with the Bitcoin blockchain, and alternative blockchain implementations and protocols associated with any kind of digital asset or a representation of a digital asset fall within the scope of the present disclosure. The terms "client", "entity", "node", "user", "sender", "recipient" , "payer", "payee" may refer herein to a computing or processor-based resource. The term "Bitcoin" is used herein to include any version or variation that derives from or is based on the Bitcoin protocol. The term "digital asset" may refer to any transferrable asset such as cryptocurrency, tokens representing at least a part of a property, a smart contract, a license, i.e. software licence, or DRM contracts for media content etc. It will be understood that the term digital asset is used throughout this document to represent a commodity that may be associated with value that may be transferred to or provided as a payment in a transaction from one entity to another.

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system and includes at least one input and at least one output. Each block contains a hash of the previous block so that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid, and the transaction is then written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Once stored in the blockchain as a UTXO, a user can transfer control of the associated resource to another address associated with an input in another transaction. This transfer is usually, but not essentially, done using a digital wallet. This digital wallet may be a device, physical medium, program, application (app) on a computing device such as a desktop, laptop or a mobile terminal, or a remotely hosted service associated with a domain on a network work, such as the Internet. The digital wallet stores public and private keys and can be used to track ownership of resources, tokens and assets etc. associated with a user, receive or spend digital assets, transfer tokens which may relate to digital assets such as cryptocurrencies, or licences, or property, or other types of resource.

Although blockchain technology is most widely known for the use of cryptocurrency implementation, digital entrepreneurs are exploring the use of both the cryptographic security system Bitcoin is based on, and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper-proof records of events, distributed processing etc.) while being more versatile in their applications.

One area of current research is the use of the blockchain for the implementation of "smart contracts". These are computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results. Another area of blockchain-related interest is the use of 'tokens' (or 'coloured coins') to represent and transfer real-world entities via the blockchain. A potentially sensitive or secret item can be represented by the token which has no discernible meaning or value. The token thus serves as an identifier that allows the real-world item to be referenced from the blockchain. Document US 2019/104196 discloses providing a REST proxy service to authenticate REST calls for use in interfacing between clients and distributed ledgers. Document US 2019/139037 discloses providing an off-chain payment hub for off-chain payments. Document WO 2018/229632 discloses providing off-blockchain channels. Document XP055525046 discloses performance and scalability of blockchain networks and smart contracts.

The above-mentioned examples or scenarios relate to a transfer of some asset, i.e. a digital asset, or control of a digital asset between users or entities. Accordingly, there is a desire to implement a secure and robust system that is akin to existing payment or e-commerce systems for exchange of funds between two entities - especially for digital asset payments between a merchant and a customer that may respect an asset in real world, with a better user experience, cheaper merchant or payee costs, and a safer level of security. More particularly there is a desire to make use of distributed ledger (blockchain) technology and the advantages of increased security, transparency and reliability of records to provide a common platform or interface that enables any merchant, or a plurality of merchants, to ensure that digital asset payments with their respective customers can be instantaneously and securely mined or written into the blockchain, thereby providing a lasting, tamper-proof and auditable record of such payments.

Such an improved solution has now been devised. The present disclosure addresses these technical concerns by proposing techniques by which transactions for one or more clients, i.e. merchants or payee entities, that are recipients of digital assets such as a cryptocurrency, may be instantaneously written into the blockchain by methods, techniques and devices that provide an application programming interface (API) for such clients. In such techniques miners will be able to dynamically, or instantly mine or write transactions into the blockchain, i.e. provide a service allowing instant transactions or zero-confirmation transactions (0-conf), for the client in a secure and reliable manner.

### Summary

The invention is defined by the appended claims. In one aspect, the present disclosure proposes methods, devices and systems associated with a payment service for processing blockchain transactions associated with a client. The payment service is implemented as a gateway or an API endpoint to which one or more clients have access to. In the present method, a request to submit a transaction received from a given client is associated with a call-back identifier. The call-back identifier is such that it enables direct communication between the given client and another entity. The payment processer submits the transaction to a miner, along with the call-back identifier. Then, once a corresponding blockchain transaction has been created by a miner, a call-back notification pertaining to it can be provided for the client directly from the miner.

In another aspect, the request from the client is associated with a channel, said channel being provided by a channel service and associated with one or more functions that enable direct communication between the client and another entity. In this case, the client is also provided with one or more access tokens and application programming interfaces (APIs) for the channel. Access to the channel can then be provided by the client to another entity based on these access tokens and/or APIs, such as a miner that has been identified as the entity mining a transaction for the client. This enables data pertaining to a corresponding blockchain transaction to be written into the channel directly by the other entity. A call-back notification specific to the corresponding transaction can then be provided via the channel service. This enables data associated with the given transaction to be accessed by the client directly from the channel whenever required or whenever it is possible to do so, such as when the client is online and in communication with the channel service via a network. In some cases, the channel service may be implemented by a channel processor . The channel processor may be the same entity as the payment processor mentioned above, or may be an entity separate to the payment processor

Throughout this specification the word "comprise", or variations such as "includes", "comprises" or "comprising", will be understood to imply the inclusion of a stated element, integer or step, or group of elements, integers or steps, but not the exclusion of any other element, integer or step, or group of elements, integers or steps.

### Brief Description of the Drawings

Aspects and embodiments of the present disclosure will now be described, by way of example only, and with reference to the accompany drawings, in which:
Figure 1 is a flowchart depicting a method for implementing a payment service or payment interface for enabling digital asset transactions associated with a blockchain for one or more clients, the method implemented by a payment processor according to a first aspect
Figure 2 is a flowchart depicting a method for requesting processing of blockchain transaction, the blockchain transaction associated with a digital asset payment associated with a client, where the method is implemented by one or more processors associated with a client according to a second aspect.
Figure 3 is a flowchart depicting a method of processing a blockchain transaction associated with a digital asset payment for a client, where the method is implemented by one or more processors associated with a miner according to a third aspect .
Figure 4 is a schematic diagram illustrating a system for proving a payment service or payment interface for enabling blockchain transaction for a client.
Figure 5 is a schematic diagram depicting the flow of data associated with a first request for obtaining fee quotes associated with a plurality of miners.
Figure 6 is a schematic diagram depicting the flow of data associated with a second request for submitting a transaction based on a selected fee quote.
Figure 7 is a schematic diagram depicting the flow of data associated with a status query based on a blockchain transaction identifier.
Figure 8 is a flowchart depicting a method of implementing a call-back mechanism for transactions, where the method is implemented by one or more processors associated with a payment processor according to a fourth aspect.
Figure 9 is a flowchart depicting a method of implementing a channel service for one or more clients, where the method is implemented by one or more processors associated with a channel processor according to the fourth aspect.
Figure 10 is a flowchart depicting a method of accessing a payment service, where the method is implemented by one or more processors associated with a client according to the fourth aspect.
Figure 11 is a flowchart depicting a method of processing messages associated with a given blockchain transaction, where the method is implemented by one or more processors associated with a miner according to the fourth aspect
Figure 12 is a schematic diagram illustrating a computing environment in which various aspects and embodiments of the present disclosure can be implemented.

### Detailed Description

While the appended claims are in relation to the fourth aspect of the present disclosure described in detail below, a detailed discussion in details to the first, second and third aspects are provided herein to provide a reader with a full and complete understanding of the claimed aspects and related embodiments of the present disclosure.

In accordance with a first aspect, the present disclosure provides a computer implemented method of implementing a payment service for one or more clients for transactions associated with a blockchain, the method implemented by a payment processor associated with the payment service. In some embodiments, where a client may be a computing resource or a node, or entity that may be associated with a digital wallet for accepting and/or processing cryptocurrency payments and may be associated with a public key or public address for such wallet. In some embodiments the client may represent a merchant entity or terminal, such as e.g. a point of sale device, that provides goods or services in the real world and receives digital asset payments for such goods or services but is not so limited. In some embodiments the payment processor is configured to provide a payment interface for the one or more clients as an associated or a third-party service. In some examples the payment processor is referred to as a payment aggregator, as it provides a plurality of payment services and functions associated with the blockchain via one or more user friendly interfaces for clients, as well as miners. In some embodiments, the payment processor is implemented as an application programming interface (API) for providing a web-based interaction, i.e. implemented as a web services, for the one or more clients such that communication may take place over the Internet using standard Internet communication protocols for web based services, such as HTTPS, TCP/IP etc. This API is either known or made available to or is sent/provided to the one or more clients associated with the payment processor. In some embodiments, this API may be provided to the client upon a registration or sign up process to access the service or functions provided by the payment processor. In some examples, the API may be provided or published for use by the client via API user interfaces such as Swagger , which is a well- known API design and development tool or interface for clients or other entities wishing to access a web-based service.

The method of the first aspect comprising the steps of obtaining a fee quote from each miner among a plurality of miners for mining the transaction. This step takes place responsive to a first request from a client for mining fee quotes associated with mining a transaction. In some embodiments the miners are nodes, implemented by one or more processors that are entrusted with validation of the locking and unlocking scripts, and mining or writing transactions to the blockchain, as also explained above in the background section. For example, if Bitcoin Satoshi's Vision (BSV) is the cryptocurrency or digital asset to be traded or transferred, the miners may be referred to as BSV nodes. The method of the first aspect includes the step of providing the obtained fee quotes to the client. In some embodiments the fee quotes relate to a current fee that is levied or charged by a miner for mining a transaction into the blockchain, irrespective of what the transaction related to, or the parties involved. In other embodiments, the fee quote may be tailored to be based on a given transaction that may be identified in the request. In some embodiments the payment processor may provide all received fees quotes to the client or may provide one or more recommended fee quotes to provide to the client among the obtained fee quotes.

Advantageously, by implementing a payment service that is provided as an API for one or more clients, i.e. merchants or payee entities, that are recipients of digital assets such as a cryptocurrency like Bitcoin SV (BSV), the method of the first aspect allows payment transactions to be almost instantaneously mined (written into the blockchain), or mined as soon as possible following the miner solving a proof of work puzzle, by allowing the client to sign up, or use a web service provided by the payment processor. By providing a current fee quote a given miner in theory agrees or commits to add the transaction to the next block to be mined by the given miner for that fee . Advantageously, this means that the client, i.e. a merchant entity, no longer has to wait for any confirmations from miners. Therefore, advantageously the 0-conf transactions associated with the client and respective miner can be implemented. The identity of the client using the payment service API can advantageously remain anonymous, while all transactions associated with the client can still be reliably mined by a miner among the plurality of miners that meets or satisfies a chosen, or selected fee quote for mining. Thus, an individual client or merchant can avail the benefits of transparency, reliability and provision of a non-modifiable and verifiable record of all payments associated with the respective client, without having to implement any additional processing or networking resources, and by making use of the proposed payment service API.

In some embodiments of the first aspect, responsive to a second request from the client to submit a given transaction pertaining to or including a selected fee quote among the obtained fee quotes, the method includes sending a request to one or more miners among the plurality of miners for generating a blockchain transaction for the given transaction.

In some embodiments, the selected fee quote is received from the client and is selected for the given transaction, which in turn may be related to a payment request or a payment transaction between the client and another node or entity, such as the customer for the client in view of goods or services purchased from the client for which a digital asset payment is required. The method then includes receiving an output script, for instance an UTXO, associated with the blockchain transaction from at least one miner among the plurality of miners that satisfies the selected fee quote. For instance, in some embodiments to satisfy the fee quote, the at least one miner should have provided or be associated with a current fee quote that has a value that is above, or below the selected fee quote, and in some cases above the selected fee quote depending on one or more rules, or predetermined criteria associated with the client. The method then includes sending a result to the client, the result including a transaction identifier (TxID) for the blockchain transaction, pertaining to the given transaction, i.e. payment between the client and customer.

Advantageously, the API of the present disclosure may be implemented as a REST (Representational State Transfer) endpoint, thereby allowing the client to communication using standard Internet or web-based protocols, such as HTTPS. Furthermore, advantageously the payment service of the first aspect enables a corresponding transaction associated with a digital asset payment can be created and written into the blockchain instantaneously based on the selected fee quote. Mining the transaction based on the selected fee quote that is selected or chosen by the client, or the payment processor on behalf of the client, advantageously enables at least one miner among a plurality of miners to mine or write a transaction into the blockchain almost instantaneously or a soon as possible, having already provided the assurance that a given miner will mine the transaction at a current fee quote that matches or satisfies the selected fee quote from the client. Thus, the payment service API has an advantage allowing instant transactions or zero-confirmation transactions (0-conf), to be mined in a blockchain for the client in a secure and reliable manner, without the client having to wait for confirmation from a miner that a transaction has indeed been added to a block and will be mined in the blockchain. This is because a given miner has already indicated that the given miner can perform mining by sending the current fee quote for mining the transaction, in response to the first request. The method of the first aspect reduces double spend risks associated with allowing instant transactions to be mined, as mining according to the first aspect will take place based on a selected fee quote chosen by, or for the client. Thus, only a miner that satisfies the selected fee quote may mine the transaction, and once the transaction is added into a block associated with the blockchain by a first miner that satisfies the fee quote, the transaction cannot be mined by other miners.

Some embodiments of the method according to the first aspect of providing a payment service implemented by a payment processor comprises providing the obtained transaction mining fee quotes based on determining a recommended fee to propose to the client, where the determined fee may be an average value of the obtained fee quotes, or the maximum value of the obtained fee quotes from the plurality of miners. Advantageously, in an attempt to avoid double-spends, the payment processor can recommend that the transaction is submitted with the highest fee value obtained from the plurality of miners in response to the first request. This way, all miners can be provided with an equal chance of mining that transaction at their respective current quoted fee. However, if the recommendation is to submit the transaction with a fee at, or above the median or average of all fee quotes received, miners with higher quotes can simply keep that transaction in a mempool , such as a secondary memory pool, and use it to check against, and reject any double spends of the transactions. Similar advantages apply if the selected fee quote is based on the recommended fee quote, or if the recommendation is part of the selection done by the client.

Advantageously, the payment processor recommends a fee quote that the client can then choose to be the selected fee quote, which in some embodiments is the maximum that the client is willing to pay for submitting a transaction associated with a digital asset payment to the client. This is advantageous if the client is a computationally unsophisticated one, or if the client has predetermined that a recommendation is provided by the payment processor, rather than selecting the fee quote themselves. Thus, advantageously the client can select a fee quote based on the recommended fee quote, rather than applying a new or separate heuristic or computation for selecting a fee quote, or arbitrarily selecting a fee quote.

In some embodiments, when a recommendation or a recommended fee quote is provided from the payment service , i.e. the API provided by the payment processor, this recommended fee quote may be provided, or all the obtained fee quotes, including the recommended fee quote, the recommended fee quote including an identifier, may be provided. Advantageously, by providing a recommendation as well as all fee quotes that are received, the payment processor provided the client with the option of either using the recommended fee quote for submitting a transaction or selecting a different fee quotes from the other fee quotes received.

In some embodiments, the method comprises the step of verifying the identity of a given miner among the plurality miners providing a respective fee quote, wherein the identity is verified based on a digital signature associated with the given miner. Cryptographic key pairs, including a private key and a public key (or public address) that are associated with each miner, may be used for verifying that the fee quotes are indeed originating from the given miner, i.e. where data signed by a private key can only be recovered or validated using the corresponding public key. Standard public key infrastructure (PKI) techniques may be used and implemented if verification is based on a digital signature.

In other embodiments, an identifier pertaining to the given miner can be used either additionally or alternatively to verify the identity of the miner. In some embodiment the method includes the payment processor, such as a MinerID. In some embodiments said identifier may be associated with a reputation indicator for the given miner. In some embodiment, the MinerID may be based on a mining pool that a given miner is part of or may be specific to the given miner. A reputation indicator relates to the measure of a miner's performance. For instance, in some examples, this reputation may be based on how the given miner has executed or mined transactions in the past at the quoted fee. For example, the reputation indicator may indicate a good reputation, e.g. by being higher in value, if the miner regularly mines transactions at or within an acceptable range of the fees quoted by that miner. In some embodiments, the reputation score or indicator for a miner may be calculated, maintained and managed by at least one payment processor that is communicatively coupled to the miner.

In some embodiments, the method of the first aspect implemented by the payment processor may include the step of validation of the obtained fee quote from a given miner among the plurality of miners based on a miner signature, which is different to the digital signature for verifying the given miner's identity using PKI techniques. The miner signature used by the payment processor for the step of validation advantageously indicates or serves as the miner's commitment to mine the transaction for the respective fee quote that was provided to the payment processor. The presence of the miner signature may also advantageously serve to confirm that the miner will reject any conflicting transactions(s). Accordingly, the step of validating based on a miner signature advantageously acts as a guarantee that the given miner will include the transaction in a block for mining, and that they will not include any conflicting transactions. In some embodiments, monitoring performance of a given miner based on such guarantee(s) offered by the given miner may define or influence the miner reputation or score associated with the given miner.

In some embodiments, the fee quotes provided by each miner among the plurality of miners is provided to the payment processor as a datatype including the value of fee quote. In some embodiments, the datatype is in a JavaScript Object Notation (JSON) object format.

In some embodiments, the received output script from the at least one miner at the payment processor is an Unspent Transaction Output (UTXO) associated with a mempool for the at least one miner, the UTXO including the transaction identifier (TxID) for the blockchain transaction, wherein the blockchain transaction pertains to the digital asset payment between the client and the customer.

In some embodiments, in order for the client to be able to advantageously identify or track blockchain transactions that relate to the given payment transaction with the customer, or any transaction associated with the client, the method comprising the steps of sending a request to the plurality of miners for obtaining a corresponding blockchain transaction for the transaction identifier, this request being sent by the payment processors to at least one miner responsive to a status query associated with a transaction identifier from the client. In response, the payment processor obtains the corresponding blockchain transaction previously generated from at least one miner among the plurality of miners. Based on the mining status of the blockchain transaction by the at least one miner, the method includes the step of sending a status result pertaining to the obtained blockchain transaction, associated with the transaction identifier to the client. The result may indicate if the blockchain transaction has been mined, i.e. completed, or rejected for some reason, or is invalid because it may have been already mined by another miner among the plurality of miners before this given miner. This advantageously avoids a double spend in case the mining has been done for a particular transaction by a different miner. In some embodiments, the miner can maintain transactions that it has not added to a block or mined in a secondary mempool, which may be or behave as an alternative or additional mempool, separate to a primary mempool associated with the miner. The secondary mempool may be a temporary mempool such that the TxlDs can be checked for a double spend. This advantageously ensures that even though the transaction is not mined by a given miner, it is still kept in the secondary mempool and used to check against and reject double spends in the future. There may be a time limit to holding a transaction that is not mined or intended for mining by a given miner in the secondary mempool of the given miner. In some embodiments, transactions stored in the secondary mempool may be associated with a time of expiry, after which they will be purged. In some embodiments, there may be a separate fee associated with the miner for storing transactions that are not mined by the given miner in its respective secondary mempool.

In some embodiments, the method of the first aspect further comprises the step of providing an application programming interface (API) converter, associated with the payment processor for performing the steps of receiving the first request for fee quotes, second request for submitting transactions associated with a digital asset payment for a client, and/or status query for the transaction from the client in a Hypertext Transfer Protocol Secure (HTTPS) format; and then converting these to a Remote Procedure Call (RPC) format, before sending the RPCs to the plurality of miners. This is advantageous as it allows the client to communicate requests associated with the blockchain via HTTPS, using a web-based API and seamlessly providing interoperability with the plurality of miners that do not communicate using Internet protocol communication standards for web services. For instance, all present BSV miners or implementations use remote procedure call. The API convertor implemented in this embodiment is not limited to HTTPS to RPC and vice versa conversion, or other web-based protocols to alternative communication protocols supported by individual miners, or networks for a given cryptocurrency or digital asset that can also be envisaged. In the reverse flow path, the method of the first aspect also includes receiving responses associated with the corresponding blockchain transaction from one or more miners among the plurality of miners in an RPC format, and accordingly converting the respective responses using HTTPS for the client. Thus, advantageously implementing the proposed interface by the payment processor enables seamless communication for submitting transactions to the blockchain when the clients (payees) and miners use different wireless data communication protocols and mechanisms.

In some embodiments, an API Gateway associated with the payment processor may be provided. The above mentioned API converter may be associated with the API Gateway in such embodiments. In addition, the API Gateway may also in some embodiments be implemented in one or more computing devices to perform/ be responsible for functions including, but not limited to one or more of:
- Caching of transactions
- Performing resilience functions in case of miner node failures
- Keeping a record of one or more endpoints or URLs that may be used for sending messages or notifications to/from the payment processor and/or client and/or miner node
- Providing resilient features to include keeping track of transactions that for some reason failed to submit. In some examples, this may be the inclusion of a configurable parameter held at, or set by the payment processor; as well as a mechanism to purge those tracked transactions that have expired. The API Gateway may also be associated with functionality for re-submit transactions in failure scenarios, thereby providing functionality for error handling of genuine transactions , and differentiating against double spends.

In accordance with a second aspect, the present disclosure provides a method for processing transactions associated with a blockchain, the method implemented by one or more processors associated with a client, the client being communicatively coupled to at least one payment processor implementing a payment service for the client. In some embodiments, the payment processor is configured to implement the method of the first aspect set out above and the associated embodiments. The method of the second aspect implemented by the client, i.e. the merchant, comprises the steps of sending a first request to a payment processor among the at least one payment processors, the request pertaining to one or more fee quotes for mining a transaction or a plurality of transactions to be obtained from a plurality of miners, via the payment processor. As mentioned above, the fee quotes obtained relate to mining any transactions, or may be particular to a given transaction relating to a digital asset payment from a customer.

In some embodiments of the second aspect, responsive to receipt of one or more fee quotes from the payment processor, the method includes selecting a fee quote among the one or more received fee quotes. As mentioned in the first aspect, the selected fee quote may or may not be based on a recommendation made by the payment processor. The method of the second aspect then comprises requesting and /or processing the digital asset payment from the customer, the request associated with the selected fee quote. In some embodiments, this request is akin to a payment request or an invoice issued by the client to a customer for a digital asset payment. For example, the client may be a coffee shop terminal associated with a digital wallet, and the customer may be paying, for instance, 2 satoshis for a coffee in response to this request, the customer also associated with a digital wallet. As the selected fee quote is now chosen, this may be added to the request for payment from the customer. The method then includes submitting a second request for a given transaction, associated with the customer payment mentioned above to the payment processor, the submission being based on the selected fee quote for mining the given transaction. In some embodiments the selected fee quote is clearly indicated or included in the second request, so that the payment processor is advantageously able to identify the miners that can mine the transaction at, or below the selected fee quote, or additionally, or alternatively for the miners to be able to identify if they satisfy the selected fee quote of not.

As mentioned above, in some embodiments the client may select a fee quote based on the value of the highest fee quote received from the payment processor, or may be at, or near the average or median, of the value of the received fee quotes. The advantages associated with either option are the same as discussed above, i.e. a maximum value allowed all miners to have a chance to mine, and other values will limit mining to some miners that meet the fee quote by being able to mine a transaction either at the selected quote, or lower, while those miners that cannot mine the transaction (as the quote was too high, for instance), can still maintain a record of the blockchain transaction in a temporary storage, such as a secondary mempool, so that this can be used to verify against any double spends for the given transaction.

In some embodiments of the second aspect , the method also includes receiving a transaction identifier for a blockchain transaction that has been generated by at least one miner, the blockchain transaction corresponding to the submitted transaction, i.e. the transaction between the client and the customer. In some embodiments, the method includes sending a status query associated with the obtained transaction identifier; and obtaining a status result for the blockchain transaction, corresponding to the transaction identifier.

The advantages associated with the second aspect are related to those discussed above in relation to the first aspect. The second aspect is complementary to the first aspect, but depicts the method implemented by the client, requesting a transaction to be written into the blockchain. The client implementing the method of the second aspect may in some embodiments be in communication with at least one payment processor, configured to implement payment service as a payment API according to the method of the first aspect.

In addition, the method of the present aspect advantageously allowing the clients to select a fee quote to provide to the payment service, which provides the client or merchant control, or certainty of influencing that their transaction will be mined at a given mining fee in a timely manner, thereby providing increased security, interoperability, reliability, efficiency and timeliness for transactions mined for a client making use of the proposed payment service or payment API.

As mentioned above, since the payment service implemented by the payment processor is an API, in some embodiments the first request and/or the status query from the client is a HTTPS GET request, and wherein the second request is a HTTPS POST request. Thus advantageously, standard Internet and web-based communication protocols can be used by the client to request for a transaction to be mined into a blockchain. In some embodiments, data associated with the first and/or second request, and/or the status query from the client, is provided in a JavaScript Object Notation (JSON) object format.

In accordance with a third aspect, the present disclosure provides a computer implemented method for processing transactions associated with a blockchain, the method implemented by a one or more processors associated with a miner among a plurality of miners, wherein the plurality of miners being communicatively coupled to at least one payment processor implementing a payment service for a client. In some embodiments, the payment service is implemented by the payment processor based on the methods described above in association with the first aspect. In some embodiments, the client is configured to implement the methods associated with the second aspect as discussed above. The method of the third aspect, as implemented by a miner among a plurality of miners, comprises the steps of providing a current fee quote pertaining to the miner for mining a transaction in the blockchain, responsive to a first request for a fee quote for a transaction associated with the client. In some embodiments, the fee quote may be provided as a data type for the payment processor associated with the client. As discussed above, the first request may relate to a request for a current fee quote for any transaction or a plurality of transactions or may be specific to a particular transaction between the client and a customer.

In some embodiments of the third aspect, responsive to a second request from the payment processor on behalf on the client, the second request relating to submitting a given transaction in the blockchain, the given transaction based on a selected fee quote, where the section may be done by the client as set out in the first and second aspects, the method comprises the following steps. Based on a determination that selected fee quotes associated with the given transaction satisfies the current fee quote for the miner, i.e. that the selected fee quote is at or within the current fee quote, the given miner then generates a corresponding blockchain transaction associated with the given transaction. The method also includes generating an output script( UTXO) for the created blockchain transaction, adding the generated output script to a mempool associated with the miner, and sending the output script to the payment processor, wherein the output script incudes a transaction identifier TxID, associated with the corresponding blockchain transaction. In some embodiments, responsive to a request for a status associated with the transaction identifier, the miner includes returning a result based on a current mining status of the corresponding blockchain transaction.

The advantages associated with the third aspect are as related to those discussed above in relation to the first and second aspects. The third aspect is complementary to the first and second aspect, but depicts the method implemented by a miner among the plurality of miners, coupled to the payment processor for constructing a transaction for the client, that can be written into the blockchain. The miners implementing the method of the third aspect may in some embodiments be in communication with at least one payment processor, configured to implement payment service as a payment API according to the method of the first aspect.

In some embodiments, the step of providing the current fee quote, and/or the step of sending the output script, and/or the step of returning the result, are implemented as a Remote Procedure Call (RPC). This is advantageous, if for instance, like the BSV Bitcoin network, the miners are configured to correspond wireless via RPCs. In some embodiments, the method of the third aspect may include the step of sending the RPCs from the miner to a node connector, and optionally a firewall for the plurality of miners, before propagating through a wireless communication network to the payment processor for the client, for additional security and streamlining of data flow among the miner pool or network, i.e. the plurality of miners associated with the payment processor. Furthermore, advantageously, the node connector may provide a secure communication channel between an API Converter, associated with the payment processor, and one or more miners in the pool.

In some embodiments, based on a determination that the selected fee quote associated with the given transaction does not satisfy the current fee quote for the miner, for instance if the current fee quote is higher than the selected fee quote, the method includes adding an output associated with the blockchain transaction to a secondary mempool, which may be an additional temporary mempool associated with the miner. As mentioned above, this may be stored herein for a certain predefined period of time so that the miner node may use such temporary entry to check and advantageously ensure that there are no double spends associated with the given transaction.

With a scaling of the use of distributed ledger (blockchain) technology for a number of applications requiring a secure, auditable, tamper proof and reliable record of events or transactions associated with it; solutions for participating entities, such as clients or merchant entities have traditionally relied on synchronising a full copy of the blockchain in real-time, identifying both transactions and embedded data pertinent to their applications and associated digital wallets directly from the blockchain. However, as the scope, capability, and security of client , i.e. merchant applications evolves, and as the blockchain scales, it has become clear that there is a need for a technical solution that allows participating parties to communicate directly, and for such applications to exchange messages directly, in order to scale and fully realise and utilise the full potential of the advantages associated with the blockchain, and making such a solution available to any type of client or entity - whether computationally sophisticated or not. The fourth aspect of the present disclosure provide such a solution for clients associated with a payment services, such as discussed above in the first aspect.

In accordance with a first implementation of the fourth aspect, the present disclosure provides a computer implemented method of providing a payment service for one or more clients for transactions associated with a blockchain, the method implemented by a payment processor. In some embodiments, the payment processor may the payment processor as discussed in relation to the first aspect. The method includes the step of receiving a request from a given client among the one or more clients, to submit to the blockchain a transaction associated with a digital asset. As mentioned above in the earlier aspects, this request is sent to the payment processor using a HTTP transmission format. In some examples, this request is the second request described above that is received from the client to submit a transaction.

In the first implementation of the fourth aspect, the request from the client is associated with a call-back identifier for enabling direct communication between the client and another entity. In some embodiments, the call -back identifier may be an access point or URI or URL associated with the client. Other types of call-back identifiers and mechanisms are also possible. Once such mechanism discussed in detail below is the provision of a communication channel.

The method of the fourth aspect then includes submitting the transaction associated with the request to a miner for including the transaction in the blockchain. In some embodiments, this step is similar to the submitting the transaction according to the second request received from the client, as discussed in relation to the first aspect. The payment processor submits the transaction associated with the request, as well as the call-back identifier , to a given miner among a plurality of miners.

In some embodiments when the given miner receives the transaction submitted via the payment processor, as mention above in the first and /or second and /or third aspect, a transaction identifier (TxID) associated with a corresponding blockchain transaction (corresponding to the request submitted) is received as a response from the miner. In some embodiments, this includes receiving an output script, for instance an Unspent Transaction Output (UTXO) UTXO, associated with the corresponding blockchain transaction as mentioned above in the first aspect. This transaction identifier (TxID) for the corresponding blockchain transaction is then sent to the client.

The payment processor also identifies the given miner to the client, either by providing an access endpoint, or miner identifier (Miner ID) or a location associated with the miner. In some cases, the miner may be identified to the client as part of the above-mentioned response with the TxID. The TxID is advantageous for the client to have, so that they can keep a track of any further correspondence or messages relating to the TxID. As mentioned above, the TxID can also be used to check the status of the corresponding transaction, should the client choose to initiate such check.

The method then includes either enabling or processing for the client at least one call-back notification pertaining to the corresponding blockchain transaction provided by the miner. In embodiments, where the call-back identify is such that it can be used directly by the miner to contact the client regarding the corresponding transaction, i.e. via a location or URL for the client, then the payment processor enables the call-back notification. If the call-back identified is such that it requires further steps, such as the provisions of access tokens or exchange of keys etc. to initiate such direct communication, then the payment process has to process such further access to allow the miner to communicate with the client using the call-back identifier. A second implementation of the fourth aspect of the present disclosure relates to an embodiment where the request from the client to submit the transaction is associated with a channel. In this case, the channel identifier mentioned above in the first implementation is in the form of a channel, the channel being configured to enable direct communication between a given client and another entity. The channel is this implementation is facilitated or provided by a channel service associated with the given client, and is specific to a given topic or transaction for the given client. The channel may be identified by a location or URL or a channel identifier associated with the client.

The channel service may be provided by a separate channel processor, or may be provided by the above-mentioned payment processor, or may be integrated with the client. In some embodiments the channel is associated with one or more functions that include: channel functions or procedures pertaining to the for transmission of data; and/or message functions or procedures pertaining to the data being transmitted using the channels. Thus, the channel enables direct or peer-to peer communication paths or sessions between entities for the transfer of messages or data. In most embodiments there are only two entities for each channel.

An example of the channel service and/or channel processor is described in detail in UK patent application no. 2007597.4 filed in the name of nChain Holdings Limited.

In some embodiments, the one or more functions are in the form of interfaces or access points are provided for the client and in most cases are specific to a given channel among a plurality of channels that may be associated with a client, for instance one for each transaction. In most embodiments, the channels enable full-duplex, i.e. two- way communication between the client and the other entity. In some embodiments, communication may only be allowed in one direction, i.e. the client might only want to send messages to or receive messages form the other entity.

In some embodiments, the client may be the owner of or associated with a plurality of channels and the above mentioned channel is one of the plurality , these being the channels that are based on the one or more functions provided by the channel service. In some embodiments, the one or more functions are application programming interfaces (APIs) issued for or provided to the given client, said APIs including channel API's for the one or more channels; and message APIs for data, i.e. messages relating to a topic associated with each, or a given channel. APIs may be understood as endpoints, interfaces or a set of functions and procedures allowing the creation or management of applications for an entity, such as the client in this case, that access the features or data of an application, or other services. In this case, it is to implement the channel functions as well as message functions.

In the second implementation, the request from the client is further associated with one or more access tokens for the channel. These tokens are provided by the channel processor. In some embodiments, said token(s) are configured for secure communication with another entity, the one or more access tokens pertaining to the given channel or even for one or more messages in the given channel. In some embodiments, the access tokens are API tokens that are specific to a given channel or a given message. Access tokens, and specifically API tokens may in some embodiments act as unique identifiers for an entity or application requesting access to the channel . In some embodiments, access token may be considered to be unique authentication credentials assigned to a client, and can even be as granular as for individual channels or individual messages in each channel. In some embodiments, the access tokens may be such that the client can provide these tokens to the other entity for each of its channels for authentication. In the present embodiments, the access tokens may be generated or provided by the client or the channel service for each transaction, for a miner that is associated with a transaction.

In some embodiments, the channel may be associated with a channel identifier, the channel identifier associated with a location or an access point for the channel. In some embodiments, each channel is associated with a specific channel identifier. The same given client can have a number of separate channels, each with its own unique identifier, which may correspond to a location or endpoint via which the channel can be accessed . In some embodiments, a given channel is for communication with any other entity in relation to data that is associated with a specific type or topic, where the data associated each topic in a channel is or is included in one or more messages or transactions. Advantageously, having a specific channel for a specific topic or transaction ensures greater clarity, reliability and flexibility for the client, especially in case of a client like a merchant entity, which may have a number of topics (such as a transaction number or ID or invoice number) that needs to be tracked or dealt with separately from all other topics or other transactions that are associated with the same client.

In embodiments, where the payment processor in the first implementation is also the channel processor , i.e. it implements the payment service as well as the channel service for the client, the method of the fourth aspect may also includes providing the miner access to the channel associated with the given client for the transaction. This is advantages in embodiments where all communication for the client is managed by or implemented via the payment processor , such that the channel is also to be set by the payment processor on behalf of the client. Access may in some embodiments may be provided by making available to the miner the channel identifier and/or location , as well as the access token(s) that the miner may need to access one or more channel and /or message functions or APIs associated with the channel in order to get or write data into the channel for that client.

Once the channel has been provided or access to the channel has been provided, call back notifications associated with a corresponding blockchain transaction from the miner are then provided for the client using such channel. Data can thus be provided by the miner using the channel, i.e. written into the channel using the one or more channel and message functions or APIs obtained using the access token for the respective channel.

In some embodiments, the call-back notification for the client may be an alert or message that is obtained as soon as data is written into a channel, said notification including the channel identifier in some cases. It is referred to as a call-back as it pertains to a specific TxID or blockchain transaction for a given client, that has already been processed by the payment processor, i.e. already sent to a miner by the payment processor. Advantageous, the channel enables messages or responses to be provided in the channel that is specifically assigned a TxID for a given client.

In some embodiments, the call-back notification relates to a notification of a double -spend of the transaction that has already been submitted by the given client and recorded in the blockchain. In this case the data provided in the channel by the miner is a return payload including the following data:
- the transaction identifier (TxID) of the blockchain transaction that is a double -spend; and, in some cases optionally
- a service endpoint for the payment processor that submitted the blockchain transaction . This is useful in case the client is associated with a plurality of payment services, and thus the identifier clearly indicates the payment processor that submitted the request to the miner in the first place.

In some embodiments, the call -back notification relates to a proof of inclusion of the transaction submitted by the given client in the blockchain, i.e. a Merkle Proof. In this case the data provided in the channel by the miner is a return Merkle proof in the channel, said return Merkle proof provided by the miner, the return Merkle proof including the following data:
- a transaction identifier (TxID) of a blockchain transaction that the Merkle proof relates to;
- a block header of the block in which the blockchain transaction is included; and
- an array of sibling hashes for the transaction identifier (TxID).

In some embodiments, the channel or message function(s) provided include(s) a JavaScript Object Notation (JSON) -over-Hyper Text transfer protocol (HTTP) API, to enable access, creation and /or management of one or more data or messages in the channel for the call-back notifications.

These data or call-back messages associated with the call-back notifications provided via the channel can be particularly advantageous for a number of blockchain associated applications, as the miner can then use a channel to send a Merkle tree proof of inclusion or a double spend notice for a transaction submitted to the blockchain directly to another entity, i.e. the client in this case that requested the transaction submission. This is useful as it means that there is no longer any need for either a client such as a merchant or another entity to have to search a blockchain to find such transaction to assess if it has been mined or not. This is because, advantageously, once mined, the proof of inclusion is directly provided using the channel.

The method of the second implementation of the fourth aspect also includes storing and/or providing said notifications to the client. In some embodiments, when the client is offline or not communicatively connected to the channel processor, the call back notifications are stored by the channel processor , i.e. as push notifications for data that is queued for the given client in the channel. In other embodiments, when the client is online or communicatively connected to the channel processor, the associated data (associated with the call-back notification) in the channel may be directly pulled from the channel.

Advantageously, the use of channels allows an asynchronous processing of each request or message that is in a given channel. This allows seamless and accurate, discontinuous or delayed processing flow for messages in a channel , since there is always clarity of the order as well as the messages for any given topic or transaction, as the channel is specific to such topic . This can be particularly useful for implementations or situations where the client or other entity may not be operational or online or able to action any data associated with the call-back notification. Thus, the above technique enables request to still be delivered reliably and processed accurately and in order using the channel, even when the a party to the channel is offline or unresponsive, as the messages will still be present in the channel for when they are next online or connected to a network so they can access the messages in the channel based on the notifications queued by the channel processor. As mentioned above, the functionality of the channel processor can also be implemented by the same entity that implements the payment processor.

Furthermore, no matter how many other messages may have been provided in the channel, they will be accessible to the other entity in the order of delivery. Thus, in spite of a delay or interruption in connectivity, the processing of messages in the channel is completed accurately and seamlessly as if there was no delay at all.

Thus, the above described second implementation of the fourth aspect and its embodiments associated with the present disclosure provide a secure, off-chain, party-to-party (peer-to - peer/direct) application messaging mechanisms for processing transactions for a client, by implementing a channel for direct communication. This aspect provides a mechanism via which parties can communicate in a secure manner, even in instances where one of the parties is temporarily offline. For client entities that are associated with a business or may represent an organisation , such as a such as merchant, such clients may have a large a number of other entities (customers) conducting transactions with them regarding a number of goods. Therefore, for such scenarios, using channels for communication with one or more customers or transactions, while being disassociated or decoupled from implementing any functionality that is related to the blockchain that maintains a record of all such transactions will be hugely beneficial. With the provision of channel functions as well as message functions via a channel service, such clients have the ability to utilise a specific channel for a specific customer relating to a specific transaction (such as a particular invoice or a query for certain goods etc) and are able to obtain any further information specific to such transaction via said channel at any time.

In a third implementation of the fourth aspect, the present disclosure provides a computer implemented method for processing transactions associated with the blockchain, the method implemented by one or more processors associated with a client . The third implementation is similar to the second implementation , and is associated with similar advantages. The method comprises the steps of sending a channel request pertaining to a channel service, the channel service implemented by a channel processor. The channel processor may implement a channel service for the client as set out in UK patent application no. 2007597.4. The first request may be s a Hypertext Transfer Protocol Secure (HTTPS) transmission GET request to the channel processor .Then the client implemented method includes obtaining access to one or more functions that enable direct communication between the given client and another entity. As with the second implementation, said one or more functions include :channel functions or procedures pertaining to one or more channels for transmission of data; and/or message functions or procedures pertaining to the data being transmitted using the one or more channels. The client also obtains one or more access tokens for the channel as set out above.

The method then includes sending to a payment processor that implements a payment service, such as the processor explained in the first aspect or first implementation of the fourth aspect, a request to submit to the blockchain a transaction associated with a digital asset. This request may be a Hypertext Transfer Protocol secure (HTTPS) transmission POST request to the payment processor, which may be associated with a HTTPS API.

The client then obtains a response from the payment processor, the response including a transaction identifier (TxID) for a blockchain transaction corresponding to the submitted transaction. The corresponding blockchain transaction pertaining to the transaction submitted by the payment processor to a miner. This TxID received in response is useful for keeping a track of the blockchain transaction corresponding to it, that has been generated by the miner.

The client also receives from the payment processor, either separate to or along with the above mentioned response, an identifier or access point or location for the miner that provided the TxID.

Then, using one or more channel functions received from the channel processor, the method includes creating a channel for communication with the identified miner , and sending the one or more access tokens associated with the channel to the other entity, which is this case is the miner. This advantageously enables the secure , reliable and accurate set up of a channel for direct communication between the client and the miner.

Then, a call-back notification is received from the channel processor, such call-back notification may be received at the client when it is online, or when it is communicatively connected to with the payment processor. Based on this notification, data pertaining to the specific blockchain transition, i.e. TxID that is associated with the client, can be directly obtained by the client from the miner when the client is online.

Some embodiments of the third implementation of the fourth aspect relate to the provision of secure addressing and encryption for channels that are used for peer to peer communication. In some examples, the method includes providing a client addressing key associated with the client, and obtaining at least one miner addressing key associated with the miner. In some cases a client end point may also be provided, and a miner point may be obtained, if such endpoints are not already made available or known to the client. The addressing keys may be static or ephemeral keys or both, and may be used for verifying the identity of the respective endpoints. In this case, communication using the channel may be initiated based on the client and/or miner addressing keys so that a shared secret key can be derived based on a handshake pattern. Such shared secret key can then be use for encrypting all communication via the channel. The handshake pattern may be based on the Noise protocol format, but other mechanisms can also be used to derive an encryption/deception key or kay pair, such as Libsodium key exchange or generation techniques.

Advantageously, providing an endpoint, such as an API endpoint for the client as well as addressing keys, such as static and/or dynamic/ephemeral keys, allows one or more processors associated with a client to securely access the miner. In some embodiments, the keys further enable an authentication procedure to be initiated prior to any transfer of messages via a channel, thereby increasing security by verifying the identity of the parties managing the channel, thereby ensuring that all communication via the channel only takes place between the two authenticated entities.

Obtaining a shared secret key so that direct communication using the channel is encrypted based on a shared secret key is further advantageous, as the shared secret key is based on the identity, i.e. the addressing keys of two parties or entities managing the channel. Thus, only the respective valid and authenticated parties will be able to decode encrypted ciphertext, thereby increasing reliability as well as privacy, and being resistant to impersonation attempts by malign parties

In some embodiments, the endpoint for the client and/or the miner may be HTTP API endpoints, and wherein said endpoint is delivered to the other party (or counterparty) using a HTTP Secure (HTTPS) transport protocol prior to communication via the channel . This advantageously ensures that the endpoint is verifiable through a chain of certificates leading back to a known and trusted Certificate Authority(CA).In some embodiments, the client end point as well as the miner endpoint may be a Universal Resource Location (URL) included in a response to a request for the one or more functions associated with the channel service. By the above , advantageously the identity of a party can be known and verified using PKI or other mechanisms by at least one party for the channel.

In some embodiments, the endpoint for the client may be an alias associated with the respective entities of the channel, where the alias being specific to the client and provided by an alias-based addressing service, the addressing service having a machine readable resource that is accessible from a defined or well-known location, the machine readable resource including one or more capabilities pertaining to the channel processor. The alias may either be known or is provided to one or more other entries , said alias being associated with an asymmetric cryptographic key pair for authentication. By the above , advantageously the identity of the parties can be known and verified using PKI or other mechanisms by both parties. There already exist mechanisms where a memorable and more user-friendly alias is used instead of complicated public address for one or more client entities. Such a solution is proposed in US patent application no. 16/384696 in the name of nChain Holdings Limited. These documents set out an alias-based payment service and associated protocols, referred to as bsvalias payment service, where an alias is used for destination addressing instead of the public address of a client entity. The alias in such a system is usually associated with a domain name of a sending/receiving client entity and may be a URI or an email address. Thus, as long as a sender or entity is aware of, or is provided with the alias, this is sufficient for the bsvalias payment system or another alias based addressing mechanism. Messages may be sent to the alias of a client, for instance, using instructions provided in a machine-readable resource, such as a JavaScript Object Notation (JSON) document, saved in a well-known URI or location for the bsvalias or other payment service.

In a fourth implementation of the fourth aspect, the present disclosure provides a computer implemented method for processing transactions associated with the blockchain, the method implemented by one or more processors associated with a miner. The fourth implementation is similar to the first implementation , and is associated with similar advantages.

In this implementation, the miner receives a request for submission of a transaction to the blockchain from a payment processor. In some embodiments this may be similar to the second request from the payment processor as discussed in the third aspect to submit a transaction on behalf of the client.

The method then includes the generating a blockchain transaction corresponding the request and sending response with an output script( UTXO) associated with the blockchain transaction to the payment processor. The output script incudes a transaction identifier (TxID) associated with the corresponding blockchain transaction. As mentioned above , an access point or identifier associated with the miner may also be provided to the client with the response.

Access to a channel specific to the client for the TxID is then received. This access may be provided directly by the client after it has created the channel , or may be provided by the payment processor on behalf of the client. As mentioned earlier, this channel enables direct communication with the given client. The access tokens for accessing the channel to write data into is also received.

Based on the access token, the miner can then obtain, access or retrieve message functions or a message APIs for providing data associated with a call-back notification in the channel, the data pertaining to the corresponding blockchain transaction (TxID). As mentioned above, the call-back notification can relate to a double spend notification or a Merkle proof for the given transactions, which can be delivered directly, securely, accurately and asynchronously, to the client via the channel.

Thus, in this fourth implementation, channel or message APIs and/or assess token associated with a channel can be obtained by the miner to enable direct communication with the client. This can be particularly advantageous for a number of blockchain associated applications, as the miner can then use a channel to send a Merkle tree proof of inclusion or any other message specific to a transaction submitted to the blockchain directly to the client. This is useful as it means that there is no longer any need for either a client such as a merchant or another entity, such as a customer or indeed a payment service to have to search a blockchain to find such transaction or verify the status of it. This is because, advantageously, once mined, the proof of inclusion can be directly sent using the channel to the client. Or, if for some reason the transaction associated with the TxID is not mined, a message such an error notification or a double spend notification can be sent for the transaction via the channel

The present disclosure also provides a computer system comprising a payment processor communicatively coupled to at least one client and at least one miner via a wireless communication network, the payment processor associated with an API convertor for conversion of HTTPS requests from the client to RPC requests for the miners , and vice versa, whereby the payment processor is implemented in accordance with the first aspect. The computer system also comprises a client communicatively coupled to the payment processor via the wireless communication network and being capable of communication with at least one customer, whereby the client is implemented in accordance with the computing device of the second aspect. The client is also communicatively coupled to a channel processor processor via the wireless communication network, whereby the channel processor is implemented in accordance with the computing device of the fourth aspect. The computer system also comprises a plurality of miners, each miner communicatively coupled to the payment processor via the wireless communication network, whereby each miner is implemented in accordance the third aspect.

In some embodiments a computing device comprising a processor and memory is provided, the memory including executable instructions that, as a result of execution by the processor, causes the device to perform the aspects and/or the embodiments discussed above.

In some embodiments, a computer-readable storage medium is provided, having stored thereon executable instructions that, as a result of being executed by a processor of a computer system, cause the computer system to perform the method of the aspects and/or the embodiments discussed above.

Some specific embodiments are now described by way of illustration with reference to the accompanying drawings, in which like reference numerals refer to like features.

### First aspect - Payment Processor

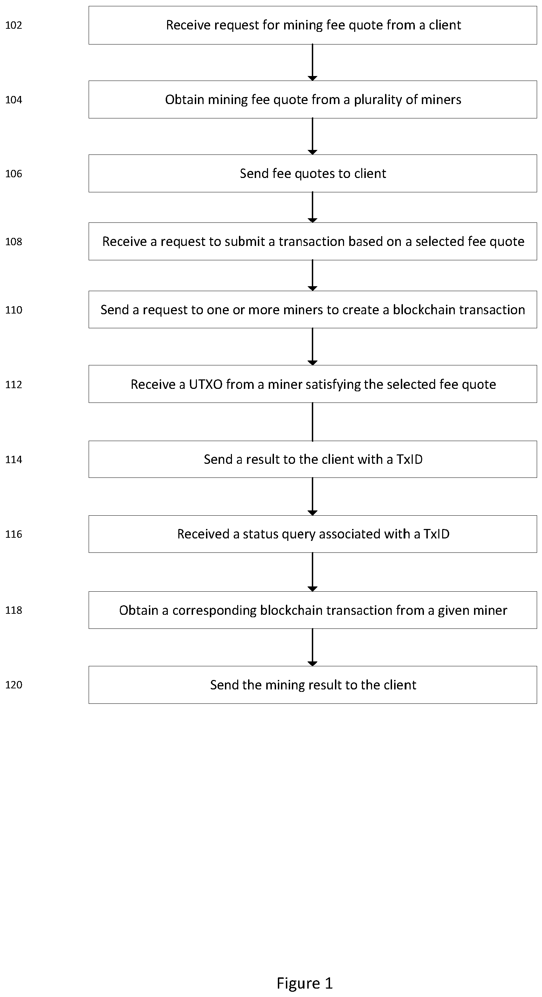

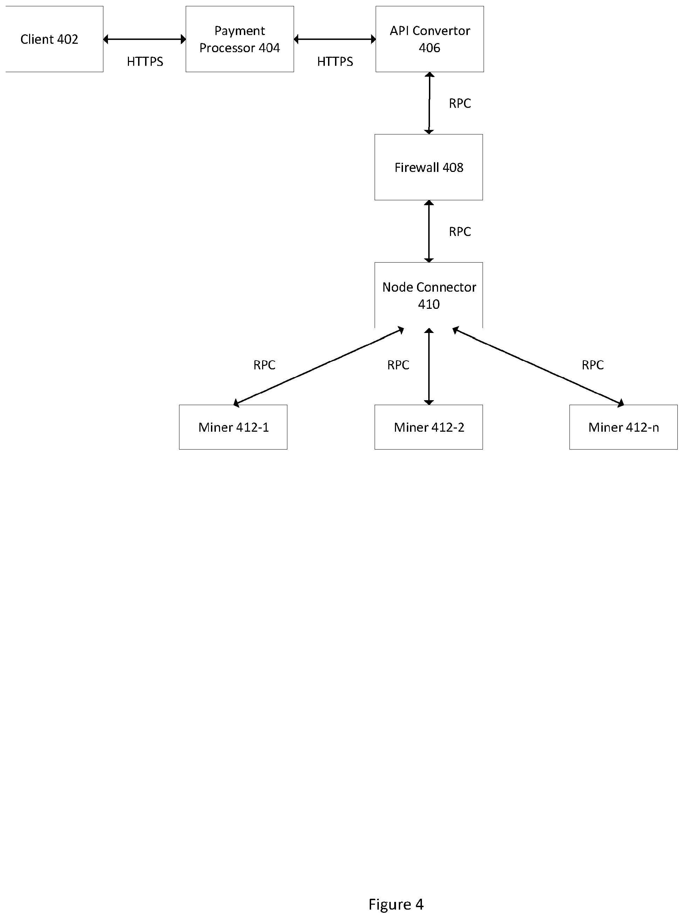

Figure 1 relates to the first aspect of the present disclosure and depicts a method performed by a payment processor for implementing a payment service for a client, as discussed above. The payment processor is communicatively coupled to a client or a plurality of clients, and also coupled to a plurality of miners which may include more than one networks of miners or more than one mining pool. In some embodiments, the payment processor may be part of or implemented in association with the client. This is true if the client is a computationally sophisticated merchant point of sale (POS) terminal. The aspects and embodiments of the present disclosure are envisaged to cover both such implementations, i.e. a remote payment processor or one that is part of the client. An example system architecture is seen in Figure 4 which is explained later herein.

In the example scenario depicted in Figure 1, the embodiments relating to the steps of obtaining a plurality of mining fee quotes, submitting a transaction based on a selected fee quote among the obtained plurality of mining fee quotes, as well as sending a status query relating to a transaction identifier are all described as taking place in sequence and described as a single process in the flowchart of Figure 1. However, the present disclosure and first aspect is not to be considered so limited. The steps relating to obtaining fee quotes in a first request in steps 102 to 106 described below may be implemented separately and independently of the remaining steps. Similarly, the steps relating to submitting a transaction in the second request from steps 108 to 114 may be implemented separately, and at a different time to the earlier steps of obtaining fee quotes. In the same way, the steps relating to a transaction status enquiry from step 116 onwards may be implemented at any time after the client has been made aware of the transaction's identifier and do not need to follow the sequence of Figure 1. All steps are shown in sequence herein simply for ease of explanation and understanding and under no circumstances is the present disclosure to be considered limited to such sequence or scenario.

Step 102 depicts receiving a first request from a client for mining fee quotes associated with mining a transaction in a blockchain. The first request may also be in relation to a plurality of transactions. For ease of explanation and understanding, Figure 1 will be explained in relation to a single transition in the first request associated with the client, but the present disclosure is not so limited in any way. This step signifies the collection of mining fee quotes from a plurality of miners for mining a transaction on behalf on the client. The transaction is usually related to a digital asset payment taking place between the client, i.e. a merchant computing resource or entity, and a customer entity. As mentioned above, the first request is received via or using the HTTPS protocol , and in a JSON format from the client. The payment processor implements a payment interface as an application programming interface (API) for the client, and therefore can accept and process HTTPS as the API is implemented as a web service. The API endpoint is made available to the client. In the case of multiple transactions in the first request, either the same API endpoint , or a separate API endpoint for the payment processor may be used.

For example, in some embodiments the payment processor can implement the payment service using a standards-based interface design such as a REST interface. REST (Representational State Transfer) is an architectural style for developing web services and web-based interactions. REST API design standards can process HTTPS requests and communication using the following commands:

| Commands | GET | POST | PUT | DELETE |
|---|---|---|---|---|
| Resource | read | create | update | delete |

GET and POST HTTPS requests will be mostly discussed herein, but the application is not limited to these commands. In this step 102, the first request that is received by the payment processor may be a HTTPS request of the form GET getFeeQuote.

A resource in the context of REST API is an object with a type, associated data, relationships to other resources, and a set of methods that operate on it. In some embodiments, the payment service is provided by the payment processor as an API implementation to access the state of a blockchain or distributed ledger, such as the Bitcoin SV (BSV) blockchain, and to trigger operations that can alter that state, via an application interface, and expose it as a REST API. Thus, the payment processor may be considered as a REST endpoint for one or more clients. For ease of explanation alone, one client (or merchant) and one payment processor will be discussed throughout, but the present disclosure is not so limited. The client can thus communicate with the payment service via HTTPS and furthermore the client may have anonymous access to the payment processor, or the payment service implemented by the payment processor, advantageously. When there are more than one client and more than one payment processor, the client in some embodiments will be responsible to target or contact the correct or intended Payment Processor or REST endpoint based on for instance any agreement that the client may have with one or more third parties that run Payment Processor.

Step 104 depicts obtaining a fee quote from each miner among a plurality of miners for mining the transaction. In this step, all miners coupled to the payment processor may be polled or contacted by the payment processor and asked to return a current fee quote for mining a transaction, i.e. writing the transaction to the blockchain after validating the locking and unlocking scripts. Presently, some blockchain networks such as the BSV network support communication via Remote Procedure Calls (RPC). Therefore in this case an API Converter associated with the payment processor is used to convert HTTPS first request, i.e. GET getFeeQuote, to an RPC first request, i.e. RPC getFeeQuote(), and vice versa. Such a conversion is necessary in embodiments that need to support such BSV node implementations or other implementations that only support RPCs. As mentioned above, the API Converter may be part of an API gateway or gateway processor associated with the payment processor, where HTTP/RPC conversion is just one of the functionalities offered by an API gateway. The purpose of the getFeeQuote() in an RPC format sent to the miners is to inform the client of fees charged by each miner. No input parameters are required, but an RPC interface may need to be implemented in relation to the RPC getFeeQuote() so that this command returns a datatype from each miner in the form of a JavaScript Object Notation JSON object, i.e. MinerFeeQuote, that contains fee-related data collected from each miner.

The data relating to the obtained fee quotes collected from each miner may be defined as JSON objects, as given in the below examples.

The JSON object FeeQuotes returned from each miner is shown below. Although examples relating to a single transactions are shown, the present disclosure is not so limited and the same applied for fee quotes representing mining fees for multiple transactions:

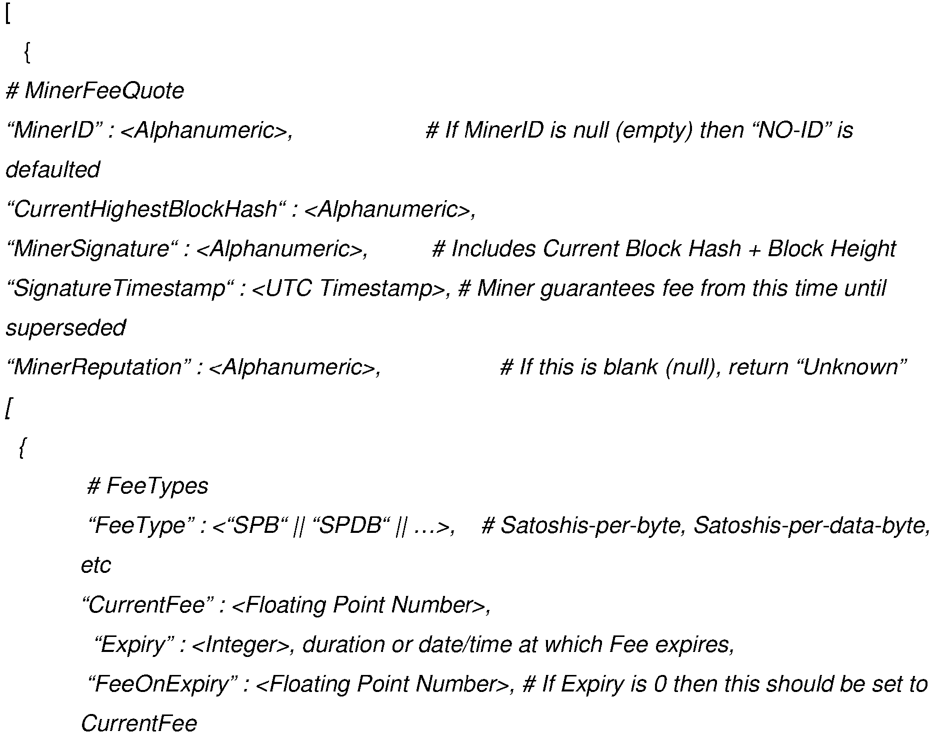

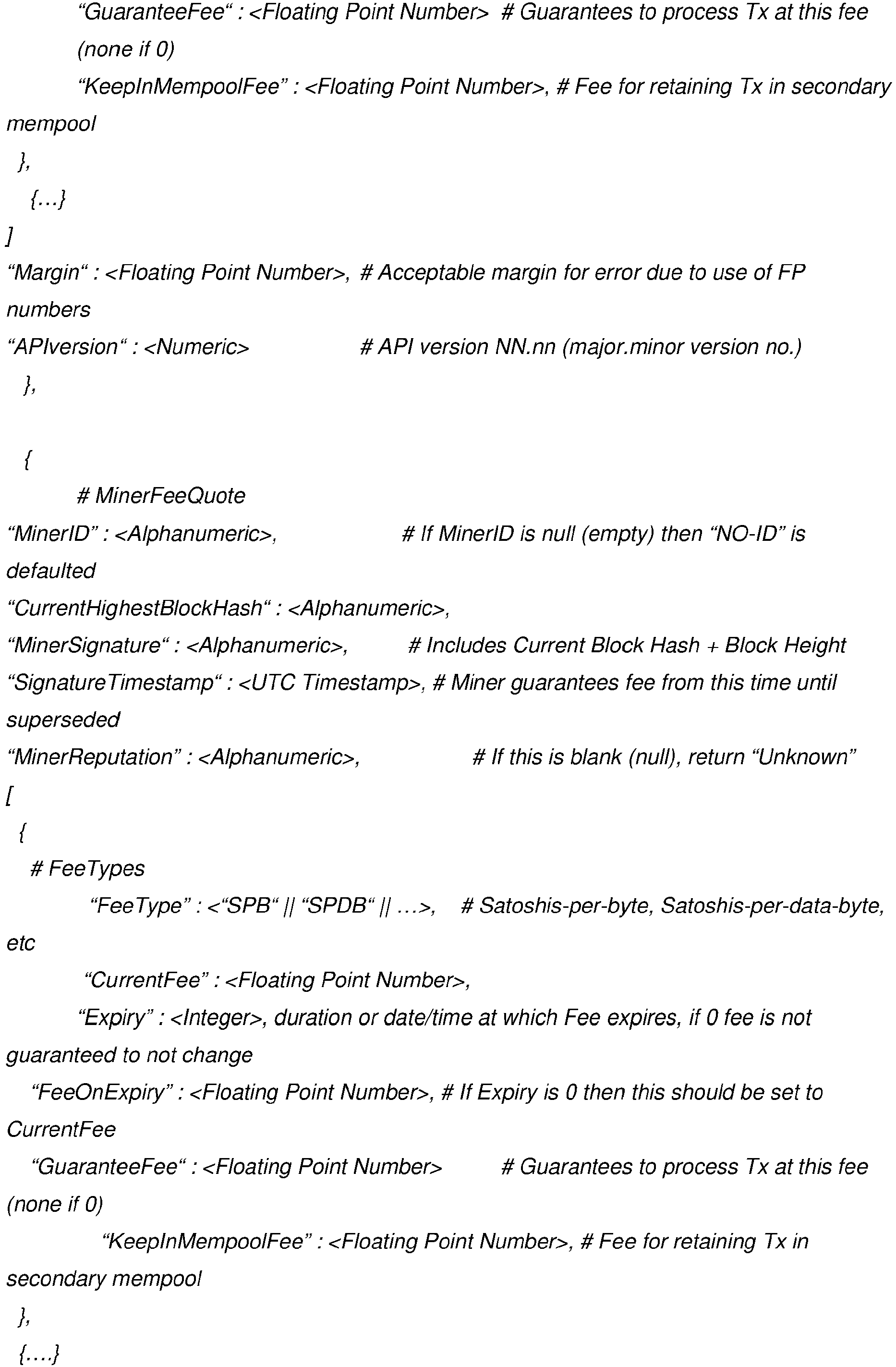

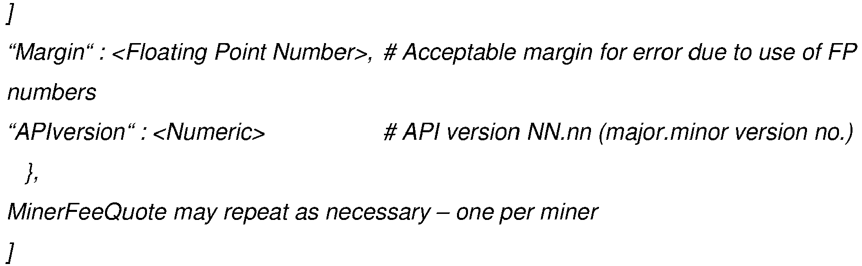

Another example of the above JSON object FeeQuotes, with filled in data items is also given below for ease of understanding :

```
 GET /mapi/feeQuote
 Response
 {
 "apiVersion": "0.1.2",
 "timestamp": "2020-09-15T12:44:19.75812Z",
 "expiryTime": "2020-09-17T13:09:31.4573849Z",
 "minerld":
 "030d1fe5c1b560efe196ba40540ce9017c20daa9504c4c4cec6184fc702d9f274e",
 "currentHighestBlockHash":
 "2084f6352e242c496cba0a3c45be9b69ff2ef69718b1286a9c0f9c2a1089f6ae",
 "currentHighestBlockHeight": 334,
 "fees": [
  {
    "feeType": "standard",
    "miningFee": {
     "satoshis": 500,
     "bytes": 1000
   },
    "relayFee": {
     "satoshis": 250,
     "bytes": 1000
   }
  }
  {
    "feeType": "data",
    "miningFee": {
     "satoshis": 500,
     "bytes": 1000
   },
    "relayFee": {
     "satoshis": 250,
     "bytes": 1000
   }
  }
 ]
 }
```

The JSON FeeQuotes object in some embodiments contains an array of miner details and fees charged, whilst MinerFeeQuote is a JSON structure containing miner and fee data received from a single miner. Some of the terms in the JSON objects above explained below.

*CurrentHighestBlockHash* may be used as a marker to identify the block hash at the point where the blockchain had grown to when getFeeQuote() was called.

*MinerSignature* may contain the signature of the miner who agreed to guarantee this transaction, as discussed above. This is different to a digital signature used to verify the identity of a miner. By doing this, a miner may guarantee that the miner will include the transaction in a block soon and optionally will not include any conflicting transactions. If a miner is not willing to guarantee a transaction, then this may be set to Null.

*Signature Timestamp* indicates the time at which the miner guarantees to mine a transaction at the stated current fee i.e. the fee is guaranteed from that point onwards until superseded. This time is superseded if the client makes a subsequent call to getFeeQuote().

*MinerReputation* relates to the measure of a miner's performance i.e. how well does a miner execute transactions at the promised or quoted current fee. The reputation score / indicator may be calculated, maintained and managed by each payment processor.

*Miner ID* may be a two-part datum that is added to a Coinbase transaction when a block is mined. If there is no Miner ID present, the payment processor may tag that miner with a Miner ID of "NULL" or simply left blank.

Within each MinerFeeQuote, an array of FeeTypes objects may be used to capture the various fee types that are currently available. Fee types can be introduced in the future without any change required to the getFeeQuote() interface provided by the payment processor. All transactions may have one FeeTypes array.

Step 106 depicts providing the obtained fee quotes to the client by the payment processor. This may include a recommended fee quote determined by the payment processor, in some embodiments. As mentioned above in relation to the first aspect, this step may include a conversion from RPC to HTTPS by an API converter, so that the client will be able to access the details using the web-based API.

In step 108 a second request is received from the client, the second request being a request to submit a given transaction pertaining to a selected fee quote among the obtained fee quotes. The given transaction in some embodiments is based on a digital asset payment that is made to the client by a customer in response to a payment request from the client. For instance, this may satoshis or other types of digital asset payment in return for a cup of coffee if the client is a merchant terminal in a coffee shop. In this step, the client requests via the payment service API implemented by the payment processor that this digital asset payment is written into the blockchain.

As mentioned above, the second request from the client may in some embodiments be a request to submit multiple transactions.

The selected fee quote in the second transaction may be based on a recommendation made by the payment processor or may be selected by the client for one or more transactions.

As mentioned above, the selected quote may be based on an average value or the maximum value of all obtained fee quotes.

In some embodiments, the second request is a HTTPS request in the form of POST submitTransaction(Tx), where Tx is in some embodiments an object in a JSON format associated with the given transaction for payment between the client and the customer. Thus the Tx (JSON object) contains data required to create a transaction on the blockchain that the client may provide or construct as a JSON structure prior to submitting the second request to the payment processor to pass on to the miners.

Step 110 depicts the step of sending a request to one or more miners among the plurality of miners for generating a blockchain transaction corresponding to the given transaction in step 108. In this step, the payment processor in some embodiments converts the HTTPS POST request in the previous step to an RPC request for submission to the miners. This may be done with the request RPC createRawTransaction(Tx), where Tx includes data associated with the given transaction, given as a JSON object as discussed in step 108. The RPC createRawTransaction(Tx) is an RPC call to create a transaction spending given inputs and creating new outputs, where outputs can be addresses or data. The RPC request may be sent to the plurality of miners, or to the miners that meet or satisfy the selected fee quote from the client in step 108. As mentioned above, miners that have provided current fee quotes at or below the selected fee quote are considered to satisfy the requirement of the selected fee quote, as they can mine the transaction at their respective current quoted fee. In response, a miner that satisfies the selected fee quote creates a blockchain transaction corresponding to the given transaction. In some embodiments, a hex-encoded raw transaction corresponding to the given transaction is returned to the payment processor.

In step 112 an output or output script associated with a corresponding blockchain transaction that has been created by at least one miner among the plurality of miners that satisfies the selected fee quote is received at the payment processor. The output script may be a UTXO associated with the corresponding blockchain transaction created by the respective miner. In some embodiments, the UTXO may also be stored in a mempool of the respective miner that satisfies the selected fee quote. The output in this step will include a transaction identifier (TxID) for the corresponding blockchain transaction created by the respective miner. TxID is the reference to the hex-encoded transaction that is submitted to the mempool of the miner, which is then accordingly mapped by the payment processor to the blockchain transaction.

This blockchain transaction may then be mined either instantaneously or at a later time to complete the mining process at the current fee quote. In some cases the created transaction may not be mined because another miner has written it into the blockchain or may be pending or rejected for some reason such as a double spend or time-lapse or invalidity.

Step 114 depicts the sending a transaction result TxResult to the client, the result including a transaction identifier TxID for the blockchain transaction that was created corresponding to the given transaction in step 108 by a respective miner. In some embodiments, the transaction result TxResult is a JSON object that is sent to the client using the HTTPS protocol from the payment processor, based on details of the corresponding blockchain transaction created by a respective miner that satisfies the selected fee quote in steps 110 and 112.

An example of the details present in the TxResult object for the client is given as follows:
JSON object *TxResult* is shown below for the respective miner and includes some terms and objects that were discussed as part of the FeeQuotes JSON object in step 104.

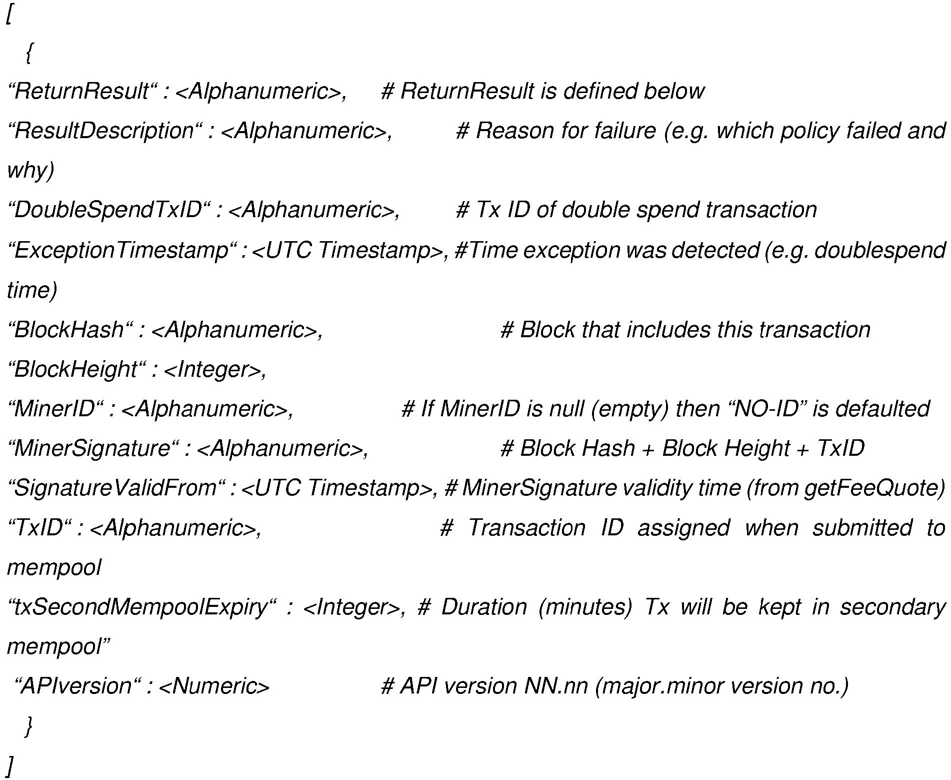

*ReturnResult* set out above may contain one of the following possible values, which are as follows:
- Submitted - no issues, transaction submitted to mempool
- Rejected_DS - rejected due to double spend - DoubleSpendTxID cannot be Null
- Rejected_Policy - rejected due to policy violations
- Rejected_Invalid - rejected due to transaction being invalid
- Rejected_FeeTooLow - Fee is too low, so miner will not include Tx in a block
- Rejected_KeeplnMemPool - Tx is rejected but kept in mempool to check for double spends.

Step 116 depicts the step of receiving a status query associated with a transaction identifier TxID from the client for sending on to the plurality of miners. This step onwards may take place asynchronously to the above steps of arranging to submit a transaction after selecting a fee quote among a plurality of mining fee quotes and is not to be considered essential to the operation of the first aspect. The embodiments from step 116 onwards relate to a scenario where the client wishes to know the status of one or more second requests made in step 108.

Step 116 enables the client to query the status of the transactions that the client has submitted to the payment processor via the HTTPS POST submitTransaction(Tx) discussed in step 108. Thus, the TxID in this step can correspond to any second request made for any given transaction that relates to a digital asset payment between the client and its customers. As discussed in the above steps, the status query is received from the client using HTTPS as a transmission protocol, the query being sent in a JSON format, such as GET queryTransactionStatus(TxID), which is in turn converted to an RPC request, RPC getRawTransaction(TxID) for sending to one or more miners among the plurality of miners.

In step 118 the payment processor receives a response from a respective miner among the plurality of miners that are associated with creating and/or processing the blockchain transaction associated with the TxID. In some embodiments, the above RPC getRawTransaction(TxID) may include a *Verbose* parameter, which may relate to an argument set to 1. In this case, a returned result from a respective miner , if successful, will in some embodiments be in a JSON format containing the decoded corresponding blockchain transaction in step 110 and 112. This advantageously offers the flexibility of capturing and processing the data therein. If the *Verbose* parameter is set to 0 then instead of a JSON datatype or document format, the hex-encoded transaction is returned to the payment processor. If no such transaction relating to TxID is found *Null* may returned, which in turn will result in a *ReturnResult* object being set to 'Unknown' . Any other returned error may also be reported to the payment processor by a miner via a *ReturnResult* and *ResultDescription* objects. These objects have been indicated in relation to step 114.

In step 120, a TxResult pertaining to the TxID is returned to the client, the response being sent using HTTPS . This represents a mining result that is associated with a given TxID sent by the client in the status query in step 116. An example of the TxResult sent to the client from the payment processor is given below.

JSON object *TxStatus* is shown below:

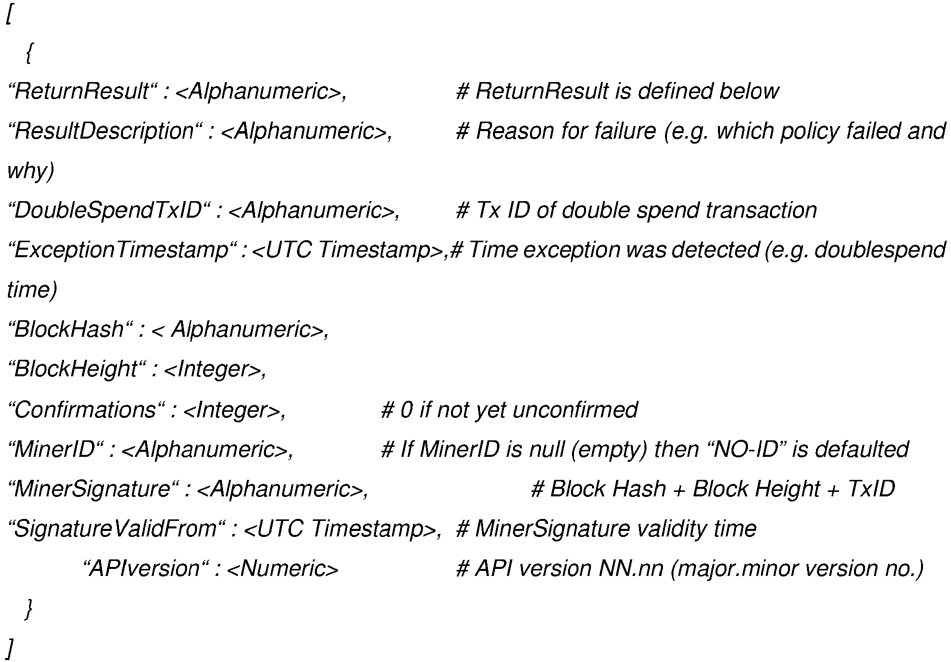

BlockHash and MinerID may be populated if the transaction has been successfully mined and flagged as Confirmed (i.e. added to a block) by the respective miner. If a miner has not set up their MinerID then then it will be set to "NULL".

The ReturnResult object may then contain one of the following mining results:
- Submitted - no issues, transaction submitted to mempool
- Confirmed - transaction confirmed - Confirmations cannot be 0 or Null
- Rejected_DS - rejected due to double spend - DoubleSpendTxID cannot be Null
- Rejected_Policy - rejected due to policy violations
- Rejected_Invalid - rejected due to transaction being invalid
- Rejected_FeeTooLow - Fee is too low, so miner will not include that Tx in a block
- Rejected_KeeplnMemPool - Tx is rejected but kept in mempool to check for double spends
- Unknown - transaction not seen or does not exist - it may be that a transaction with the TxID provided does not exist in the mempool or the blockchain. If so, this should be stated in the ResultDescription.

### Second aspect - client

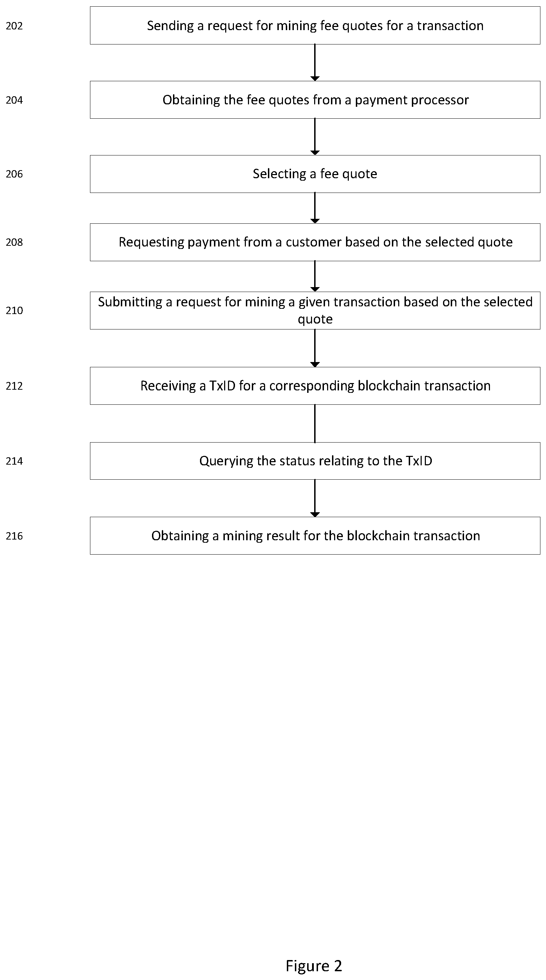

Figure 2 relates to the second aspect of the present disclosure and depicts a method performed by one or more processors associated with the client, where the client is communicatively coupled to at least one payment processor implementing the method as discussed in relation to first aspect. The payment processor implements the payment service or payment API discussed in relation to Figure 1 for a client, as discussed above.

In the example scenario depicted in Figure 2, the embodiments relating to the steps of obtaining a plurality of mining fee quotes, submitting a transaction based on a selected fee quote among the obtained plurality of mining fee quotes as well as sending a status query relating to a transaction identifier are all described as taking place in sequence, i.e. described as a single process in the flowchart of Figure 2. However, the present disclosure and second aspect are not to be considered so limited. The below described steps relating to obtaining fee quotes in a first request in steps 202 to 206 may be implemented separately and independently of the remaining steps. Similarly, the steps relating to submitting a transaction in the second request from steps 208 to 212 may be implemented separately , and at a different time to the earlier steps of obtaining fee quotes. In the same way, the steps relating to a transaction status enquiry from step 214 onwards may be implemented at any time after the client has been made aware of the transaction's identifier and does not need to follow the sequence of Figure 2. All steps are shown in sequence herein simply for ease of explanation and understanding and under no circumstances is the present disclosure to be considered limited to such sequence or scenario. Furthermore, as discussed above in relation to Figure 1, the fee quotes can be requested and/or obtained and/or submitted and/or queried for a single transaction separately each time, or for a set or batch of multiple transactions that are to be submitted by the client in a single request, i.e. at the same time. For ease of explanation and understanding , Figure 2 will be explained in relation to a single transition in a first request/ second request and a status query that is associated with the client, but the present disclosure is not so limited in any way.

Step 202 depicts sending a first request to a payment processor among the at least one payment processors that are associated with the client for providing a respective payment service. As discussed in relation to step 102 of Figure 1, the request is pertaining to one or more fee quotes for mining a transaction for the client. This first request relates to the HTTPS GET getFeeQuote discussed in relation to step 102. As discussed above, the request may be for mining any transaction for the client or may be a request for getting fee quotes for mining a transaction relating to a digital asset payment from a customer associated with the client.

In Step 204, a plurality of mining fee quotes is received from the payment processor, the fee quotes relating to mining fees for each of a plurality of miners that are communicatively coupled to the payment processor serving the client. The structure and details of the fee quotes received is already discussed in relation to step 104 of Figure 1.

Step 206 depicts selecting a fee quote among the one or more fee quotes received in step 204. In some embodiments the selected fee quote may be based on a recommended fee quote proposed by the payment processor. In some embodiments, the selection is made by one or more processors associated with the client. The selected fee quote may be an average or median value of the obtained fee quotes, or the maximum value of the obtained fee quotes from the plurality of miners or the highest fee quote in a secondary mempool, as discussed above. So, the client can select the highest fee value obtained from the plurality of miners in response to the first request. This way, all miners can be provided with an equal chance of mining that transaction at their respective current quoted fee. However the client can instead select a fee quote that is at or above the median or average of all fee quotes received, so that miners with higher quotes may simply keep that transaction in a secondary mempool and use it to check against, and/or reject any double spends of the transactions.

Step 208 depicts the step requesting and /or processing the digital asset payment from the customer associated with the client. This may be a payment request, or an invoice sent by the client to the customer for the digital asset payment using known methods applied to respective digital wallets implementations for both parties. Since the selected fee quote for mining any transaction to the blockchain is already known, the request may include or be associated with the selected fee quote.

Step 210 depicts the step of sending a second request to submit to the blockchain, a given transaction associated with the digital asset payment from the customer to the payment processor. The submission in this step is based on the selected fee quote for mining the given transaction in step 206. This step relates to the client sending the HTTPS POST submitTransaction(Tx) request to the payment processor in step 108 of Figure 1, with the relevant details in the JSON datatype format for the given transaction.

Step 212 depicts the step of receiving a transaction identifier (TxID) for a blockchain transaction corresponding to the submitted transaction. As discussed in steps 110 and 112 of Figure 1, the TxID is created by at least one miner that satisfies the selected fee quote. In some embodiments, this may be sent in association with or as part of a transaction result, i.e. TxResult showing the current mining status of the corresponding blockchain transaction for the respective miner. This is described in relation to step 114 of Figure 1.

Step 214 relates to the client sending a status query when the client wishes to query the mining status of a transaction previously submitted in step 210, relating to a payment between the client and a customer. As the client would have received the TxID of the submitted transactions in step 212, this request can be based on the TxID and in the format HTTPS GET queryTransactionStatus(TxID), as described in step 116 of Figure 1.

Step 216 depicts obtaining a mining status result for the blockchain transaction corresponding to the transaction identifier TxID queried in step 214. This may be in a JSON format and is sent to the client using HTTPS by the payment processor, after the payment processor receives the details of the corresponding transaction. The status results may be in the form of a TxResult JSON object as seen in step 120 of Figure 1.

### Third aspect - miner implementation

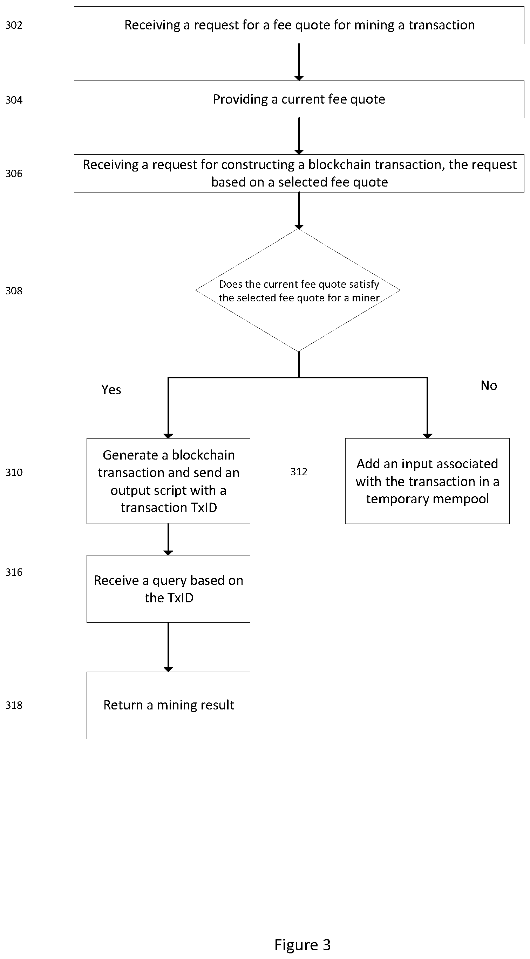

Figure 3 relates to the second aspect of the present disclosure and depicts a method performed by a miner among a plurality of miners, where the plurality of miners are communicatively coupled to at least one payment processor implementing the method as discussed in relation to first aspect. The payment processor implements the payment service or payment API discussed in relation to Figure 1 for a client. The client is configured to implement the method discussed in related to Figure 2.

In the example scenario depicted in Figure 3, the embodiments relating to the steps of providing a plurality of mining fee quotes, generating/creating a blockchain transaction based on a selected fee quote among the obtained plurality of mining fee quotes, as well as providing a mining status relating to a transaction identifier are all described as taking place in sequence, i.e. described as a single process in the flowchart of Figure 3. However, the present disclosure and third aspect are not to be considered so limited. The below described steps relating to providing current fee quotes in response to a first request in steps 302 and 304 may be implemented separately and independently of the remaining steps. Similarly, the steps relating to generating a corresponding blockchain transaction in response to the second request from steps 308 to 314 may be implemented separately , and at a different time to the earlier steps of obtaining fee quotes. In the same way, the steps relating to providing a transaction status in step 316 can be implemented at any time after the client has been made aware of the transaction's identifier and does not need to follow the sequence of Figure 3. All steps are shown in sequence herein simply for ease of explanation and understanding and under no circumstances is the present disclosure to be considered limited to such sequence or scenario. Furthermore, as discussed above in relation to Figures 1 and 2 the fee quotes can be requested and/or obtained and/or submitted and/or queried for a single transaction separately each time, or for a set or batch of multiple transactions that are to be submitted by the client in a single request, i.e. at the same time. For ease of explanation and understanding , Figure 3 will be explained in relation to a single transaction in a first request/ second request and a status query that is associated with the client, but the present disclosure is not so limited in any way.

Step 302 depicts receiving a first request from a payment processor for providing a fee quote for a mining a transaction on behalf of a client. This request relates to the RPC getFeeQuote() request that is sent from the payment processor, as set out in relation to step 104 of Figure 1.

Step 304 depicts providing a current fee quote pertaining to each miner among a plurality of miners for mining the transaction in the blockchain. The fee quote may be provided in a format of the JSON object FeeQuotes as set out in relation to step 104 of Figure 1.

Step 306 depicts the step of a miner among the plurality of miners receiving a second request relating to submitting a given transaction associated with the client to the blockchain, where the given transaction is based on a selected fee quote from the client. The given transaction is related to the Tx in the POST submitTransaction(Tx) in step 210 of Figure 2, i.e. a given digital asset payment transaction between the client and a customer. The RPC version of this received from the payment processor is RPC createRawTransaction(Tx) for the given transaction , as explained in relation to step 110 of Figure 1.

Step 308 depicts checking that the miner meets or satisfies the selected fee quote from the client. This may include a determination of whether or not the current fee quote provided to the payment processor by the respective miner in step 304 is either at or below the selected fee quote that the client is willing to pay for mining the given transaction Tx.

If the current fee quote satisfies the selected fee quote, then in step 310 a blockchain transaction corresponding with the given transaction is created. This is discussed in relation to step 110 of Figure 1. In some embodiments, a hex-encoded raw transaction corresponding to the given transaction is returned to the payment processor. An output script or UTXO is also provided to the payment processor, as discussed in step 112 of Figure 1, where the output script incudes a transaction identifier (TxID) associated with the corresponding blockchain transaction that has been created by the respective miner. The output script( UTXO) for the blockchain transaction may then be added to the mempool associated with the miner for mining instantaneously or at a later time.

If the current fee quote does not satisfy the selected fee quote, i.e. if the respective miner's current fee quote is higher than that allowed or selected by the client, then the respective miner may in some embodiments choose to mine at a lower fee than the current fee quote, or may choose not to mine the given transaction since the selected fee is lower than their respective current quoted fee. In embodiments where the respective miner chooses not to mine the transaction at the lower selected fee quote, in step 312 the respective miner may instead add details in relation to a blockchain transaction constructed for the given transaction in a secondary memory pool associated with the respective miner. This transaction in some embodiments may be held in the secondary mempool and used to check for double spends. All transactions stored in the secondary mempool may have a time of expiry, after which they can be purged.

On an assumption that a blockchain transaction has been created, i.e. that the respective miner meets the requirements of the selected fee quote set by the client, step 316 relates to the respective miner receiving a status query associated with the TxID of the blockchain transaction that was created for the client. This status enquiry is based on the RPC request RPC getRawTransaction(TxID) received via the API convertor as discussed in relation to steps 116 and 118 of Figure 1.

In step 318, a result based on a present mining status of the corresponding blockchain transaction pertaining to a respective miner is provided to the payment processor. This may be based on a JSON object structure for TxStatus as explained in relation to step 120 in Figure 1.

Figure 4 is a schematic diagram of a deployment architecture of the payment service provided to a client 402 as an API by a payment processor 404. There may be more than one such payment processor 404, and also the one or more payment processors 404 may be implemented as part of a client, or may be associated with the client, or may be implemented separately to the client and be in communication with the client over a communication network, such as the Internet. As discussed in the above aspects, communication between the client 402 and the payment processor 404 uses the HTTPS protocol. An API Converter 406 is also shown separately in this schematic but may in some embodiments be implemented as part of the payment processor 404. In some embodiments the API converter 406 may be operated by or implemented in associated with a plurality of miners 412-1 to 412-n. The API converter 406 allows for converting HTTPS requests to RPC requests before sending it on to one or more miners 412 -1 to 412-n coupled to the payment processor 404 for providing a service to the client 402. The API converter 406 is shown as being connected to miners 412-1- 412-n via a firewall 408. All communications associated with the miners 412-1 to 412-n use RPC. A node connector 410 is also shown for connecting a plurality of miners 412-1 to 412-n to the payment processor 404 via the firewall 408. In some embodiments, the node connector may ensure, or process RPC calls associated with one or more payment processors that implement a respective payment service, as discussed in relation to Figure 1. The node connector 410 provides a secure communication channel between the API Converter 406 and one or more miners 412-1 to 412-n.

There can be one or more payment processors 404 connecting the miners 412-1 to 412-n via the API Converter 406. The client 402 will most likely include a digital wallet application to obtain quotes for miner fees (getFeeQuote), submit transactions (submitTransaction) and enquire the status of a transaction (queryTransactionStatus), as explained in relation to the first to third aspects for individual or multiple transactions. The payment processor 404 acts as a REST endpoint to the client 402, and the client may have anonymous access to this service. The miners 412-1 to 412-n may mine one or more nodes in exchange for mining rewards, which may in some embodiments be made up of block rewards and miner fees. A block reward is referred to a BSV or cryptocurrency awarded once a miner 412 successfully mines a block. A miner fee is the reward a miner 412 receives if they confirm a transaction and add it to a newly mined block.

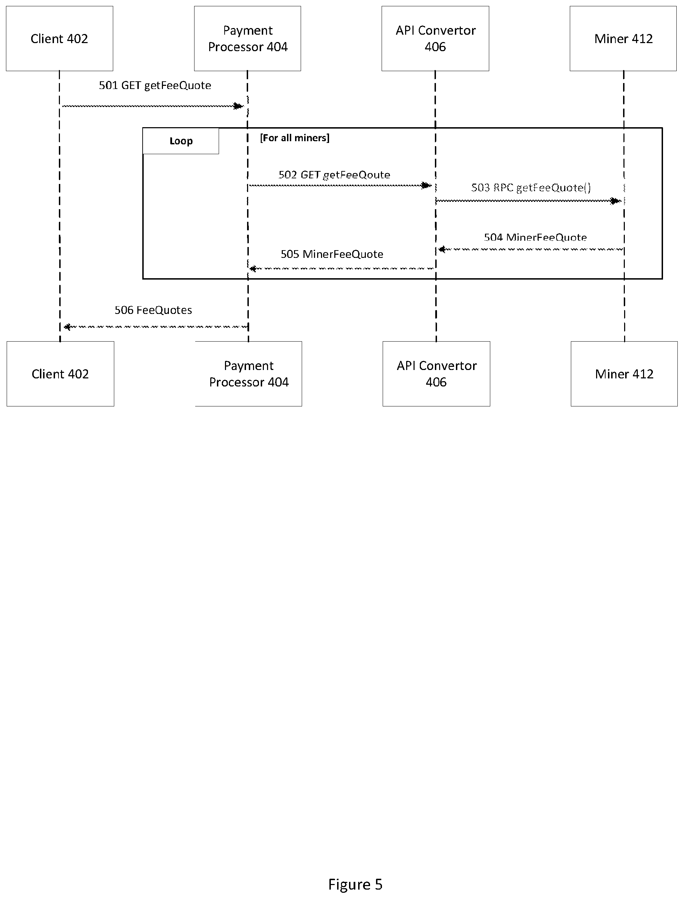

Figure 5 is a schematic diagram depicting the data flow between the components of the architecture shown in Figure 4 for implementing the getFeeQuote command or template from the client. This is already discussed above in detail relation to Figures 1 to 3, and Figure 4 simply sets out schematically the interaction of the client, payment processor and miners for obtaining mining fee quotes. The flow originates from the client 402 when the HTTPS GET getFeeQuote command is sent in step 501 to the payment processor 404. In step 502, the GET command is sent to the API converter 406, which converts this in step 503 to an RPC command RPC getFeeQuote(). In step 504 MinerFeeQuote is returned to the API converter 406 as a JSON object format from each miner 412 in the plurality of miners 412-1 to 412-n, which is in turn provided to the payment processor 404 in step 505. Steps 502 to 505 are repeated for each miner among the plurality of miners 412-1 to 412-n and the result (the fee quotes) is the sent to the client 402 in a HTTPS transmission in step 506.

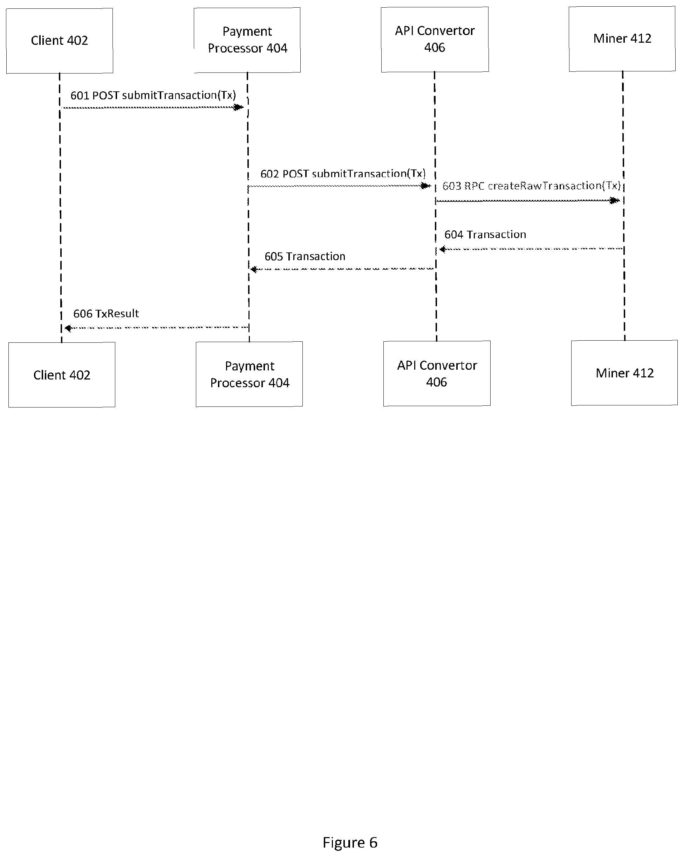

Figure 6 is a schematic diagram depicting the data flow between the components of the architecture shown in Figure 4 for implementing the submitTransaction command or template from the client. This is already discussed above in detail in relation to Figures 1 to 3, and Figure 4 simply sets out schematically the interaction of the client, payment processor and miners for providing a blockchain transaction associated with a payment for a client. The flow originates from the client 402 when the HTTPS POST submitTransaction(Tx) command is sent in step 601 to the payment processor 404 for a given transaction Tx between the client 402 and a customer. As mentioned in relation to the above aspects, the Tx may be associated with a selected fee quote (not shown in this figure). In step 602, the POST command is sent to the API converter 406, which converts this in step 603 to an RPC command RPC createRawTransaction(Tx). The blockchain transaction is then constructed for each miner 412 that meets the selected fee quote. In step 604 the hex-coded blockchain transaction is returned to the API converter 406. The transaction includes a specific identifier TxID, as explained in the above aspects. In step 605 an output associated with the blockchain transaction is sent to the payment processor 404. A result pertaining to the blockchain transaction is then returned to the client as a JSON TxResult object that includes the TxID in step 606.

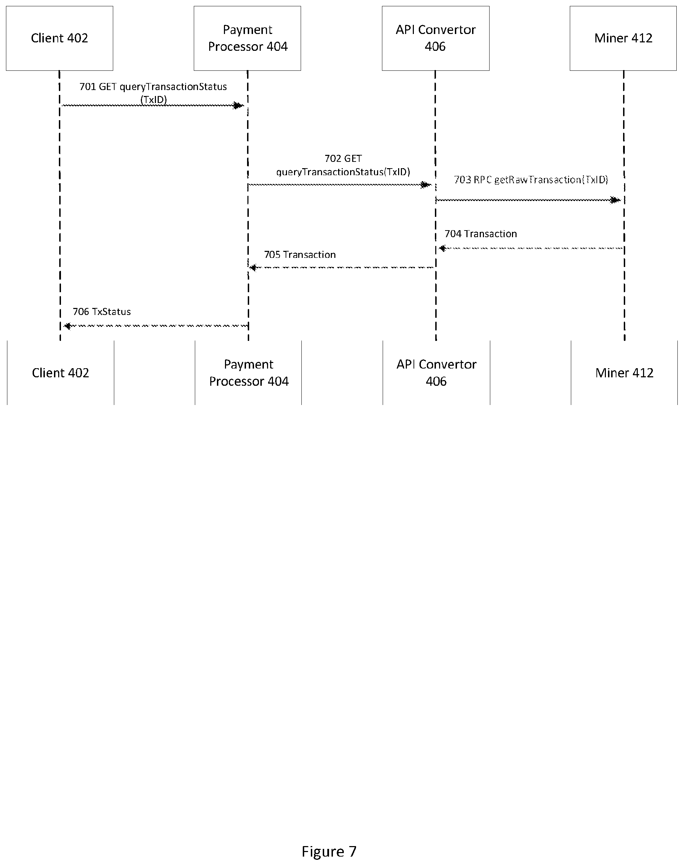

Figure 7 is a schematic diagram depicting the data flow between the components of the architecture shown in Figure 4 for implementing the queryTransactionStatus command or template from the client. This is already discussed above in detail relation to Figures 1 to 3, and Figure 4 simply sets out schematically the interaction of the client, payment processor and miners for providing a blockchain transaction associated with a payment associated with a client. The flow originates from the client 402 when the HTTPS GET queryTransactionStatus(TxID) command is sent in step 701 to the payment processor 404 for a given transaction TxID relating to a blockchain transaction that was previously retuned to the client as part of the submitTransaction flow in Figure 6. In step 702, the GET command is sent to the API converter 406, which converts this in step 703 to an RPC command RPC getRawTransaction(TxID). The blockchain transaction associated with a given miner 412 that pertains to the TxID is then identified. In step 704 the identified hex-coded blockchain transaction and its associated status is returned to the API converter 406. In step 705 a status result associated with the blockchain transaction pertaining to the TxID is sent to the payment processor 404. A status result pertaining to the blockchain transaction for TxID is then returned to the client as a JSON TxStatus object in step 706.

Furthermore, as discussed above in relation to Figures 1 to 3, the fee quotes can be requested and/or obtained and/or submitted and/or queried for a single transaction separately each time, or for a set or batch of multiple transactions that are to be submitted by the client in a single request, i.e. at the same time. For ease of explanation and understanding , Figure 4 to 7 have been explained above in relation to a single transition in a first request and/or second request and/or status query that is associated with the client, but it will be understood that the present disclosure is not so limited in any way.

### Fourth Aspect - Call-back identifiers

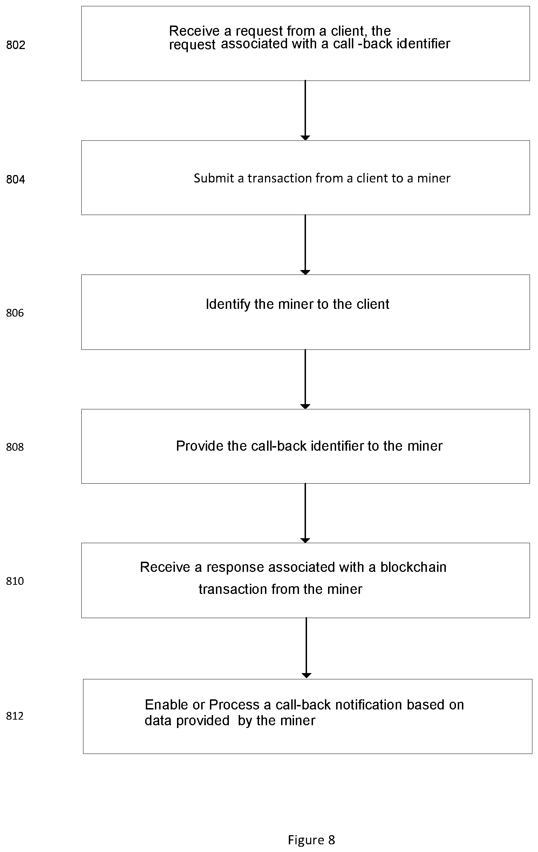

Figure 8 is a flow diagram depicting a method of facilitating a call-back mechanism for transactions, in according with a fourth aspect. This figure relates to a method implemented by a one or more processors associated with the payment service, as discussed above in related to the first aspect.

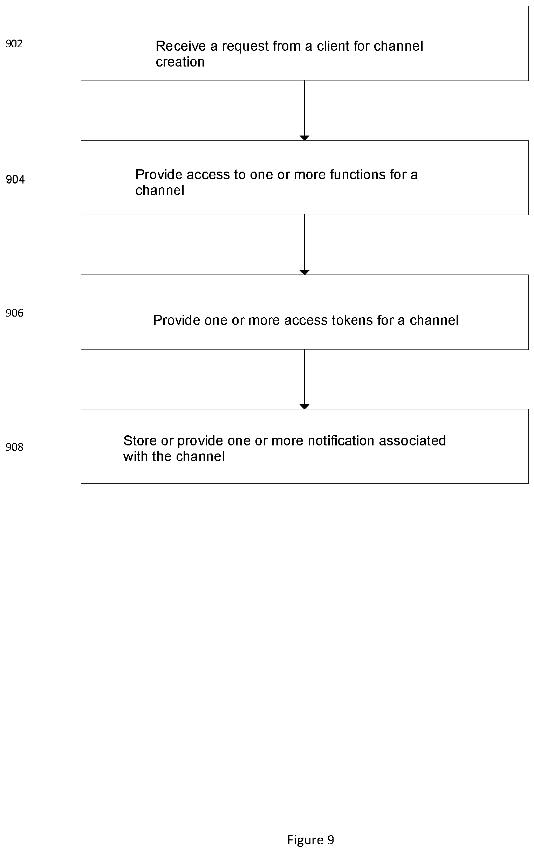

Step 802 includes receiving a request from a given client among the one or more clients. The request is in relation to submitting a transaction that is associated with a digital asset. For instance, this may be the second request to submit a transaction explained in step 108 of Figure 1. The request is also associated with a call-back identifier. The call-back identifier in some embodiments may be one that is either provided by the client or is associated with the client. For instance this may be a URL or API endpoint using which the client can be contacted. In some cases, this could also point to a location associated with the client. In some cases, the call-back identifier may be a location or identifier communication channel. Such a channel is further explained in figures 9 to 11 below. The purpose of the call-back identifier is to enable or allow a means for establishing direct communication between the client and another entity. The call-back identifier is specific to a client and in some cases, specific to a particular topic, such as the transaction associated with the request in this step.

Step 804 includes submitting the transaction associated with the request to a given miner among a plurality of miners for including the transaction in the blockchain. This is similar to the process carried out for the second request in step 110 of Figure 1.

Step 806 includes identifying the given miner to the client. This may be performed by a number of techniques, such as providing an endpoint or URL that is associated with the given miner to the client. This may be sent to the client using the HTTPS transmission protocol . In some cases, if the miner is associated with an alias for addressing, such as a using the bsvalias addressing service mentioned above, this may be provided to the client. In some cases, if the miner is associated with a Miner ID and/or a reputation as mentioned above, such information may also be provided to the client. In some cases, this step of identifying can be done along with or after step 812 set out below.

Step 808 includes providing the call-back identifier described in step 802 to the miner, so that the miner can contact the client directly using this. In some cases, if the payment processor is handling communications on behalf of the client , then the call-back identifier may point to the payment processor. This figure relates to the scenario where the call-back identifier is for the client, but the present disclosure is not so limited. For instance, the call-back identifier can be an encrypted identifier (endpoint) that uniquely identifies the client or payment processor.

In step 810, a response is received from the given miner with details relating to a corresponding blockchain transaction that has been generated for the transaction request in step 802. This will include a transaction identifier (TxID) for the transaction, which can be provided to the client. In some cases, the miner identity in step 806 may be provided to the client once or after the TxID has been received. In some embodiments, the response in this step includes an output script, for instance an Unspent Transaction Output (UTXO), associated with the corresponding blockchain transaction as mentioned above in the first aspect. This transaction identifier (TxID) for the corresponding blockchain transaction is then sent to the client.

Step 812 includes enabling or processing for the client at least one call-back notification pertaining to the corresponding blockchain transaction (TxID) provided by the miner based on the call-back identifier mentioned in step 802. If this call-back identifier is a call-back endpoint URL or URI for the client, then the messages can be provided as a HTTP POST message directly to such location. The message can be encrypted based on one or more known techniques.

Figure 9 relates to a second implementation of the fourth aspect of the present disclosure where the call-back identifier associated with a request relates to a channel that is provided for the client by a channel processor. As mentioned above, the channel processor may be a separate entity providing a channel service for the client, or may be the same entity as the payment processor. The below steps in this figure depict an embodiment implemented by the channel processor.

Step 902 depicts receiving a request associated with a channel from a given client that has signed up for the channel service , such as discussed in UK patent application no. 2007597.4 filed in the name of nChain Holdings Limited . This request in this embodiment is in relation creating a channel. However, the channel service is capable of enabling other functions , such as updating API's associated with existing channels. In most cases, the identity of the client may be checked to see if the client is registered to use the channel service and the functionality offered by it. In some embodiments, this may be based on known authentication methods such as password protected login authentication or the like, during registration. Validation may be based on a password received matching the password in a stored record. In other embodiments, standard PKI techniques based on cryptographic or addressing private/public key pairs may also be used to validate a digital signature that may be present in the request received form the client in step 902. In this case, the identity of the client can be verified by checking if request signed by the private key can be successfully recovered or validated using the public key. If the client is not valid or registered, the request in this step is either not progressed further, or a registration step may be initiated by the channel service.

In step 904, the requested channel functions and/or message functions are provided to the client.

Some examples of schema and/or formats associated with requests for creation of the channel and/or message functions/APIs are shown below, along with example schema for responses provided by the channel processor.

### 1.1 Channel APIs:

Channel APIs may be a JSON-over-HTTP API client accounts provided by the channel service to service to create and/or manage channels for peer-to-peer communication.

All API endpoints may require authentication in some embodiments. The specific authentication scheme may be implementation-determined. Common forms include schemes such as OAuth, basic authentication, and bearer token method. As mentioned above, Channel APIs may be optionally be secured by API tokens that are provided or generated by the clients Create Channel: Creates a new Channel owned by the client, i.e. the account holder for the channel service

### Request format:

```
POST /api/account/<account-id>/channel
 Authorization: ...
 Content-type: application/json
 Content-length: ...
 {
  "public_read": true | false,
  "public_write": true | false,
  "sequenced": true | false,
  "retention": {
     "min_age_days": null | <number>,
     "max_age_days": null | <number>,
     "auto_prune": true | false
  }
  }
```

### Response format:

The successfully created response contains an initial access token . Account credentials may be used to access the Channel API, but tokens may need to be used to access the Messaging API. This initial access token for this belongs to the account holder, for the purpose of them reading and writing to the Channel.

```
 201 OK
 Content-type: application/json
 Content-length: ...
 {
  "id":
       "...",
  "href": "https://example.org/channel/<id>",
  "public_read": true | false,
  "public_write": true | false,
  "sequenced": true | false,
  "head": <sequence>,
  "retention": {
     "min_age_days": null | <number>,
     "max_age_days": null | <number>,
     "auto_prune": true | false
  },
  "access_tokens":[
     {
       "id":
            "...",
       "token": "...",
       "description": "Owner",
       "can_read": true,
       "can_write": true
     }
  ]
  }
  }
```

The Message APIs allow account holders and the relevant counterparties (the other entity for the channel to read from, or write message for a given channels. The following Message APIs may be provided as a JSON-over-HTTP API for account holders, and their counterparties, to exchange messages.

### 2.1 Test Channel for new messages

### Request format:

HEAD /api/channel/<id>
Authorization: <api-token>

### Response format:

201 OK
ETag: <max-sequence>

### 2.2 Write message to Channel

### Request format:

POST /api/channel/<id>
Authorization: <api-token >
Content-type: ...
Content-length: ...

### Responses format:

### a) Accepted

The message was written to the Channel.
201 Created

### b) Sequencing Failure

The Channel was created as sequenced, and the API token associated with the request has not marked as read the latest messages in the channel. If it is still appropriate, the client may need to retry the write attempt.

### 409 Conflict

### c) Message Too Large

In embodiments where end-to-end encryption secures all messages, for instance based on the Noise Protocol, a maximum size of any single message is set 65536 bytes. As there should not be messages larger than this, it may be in some embodiments useful t to limit the maximum size of any message written to a channel. Messages larger than this may be refused by the channel.

### 413 Payload Too Large

### d) Storage Quota Exceeded

A quota that may be in some embodiments set by the service operator has been exceeded. The client request may be valid, but the storage service is unable to fulfil it at this time.

### 507 Insufficient Storage

### 2.3 Get Message in Channel

Returns all messages from a Channel, optionally filtered to just unread.

```
 Request format:
 GET /api/channel/<id>[?unread=true]
 Authorization: <api-token>
```

The unread query string parameter is optional.

```
 Response format:
 201 OK
 Content-type: application/json
 Content-length: ...
 ETag: <max-sequence>
 {
  "messages": [
     {
       "sequence": <number>,
       "received": <unix-timestamp>,
       "content_type": "...",
       "payload": "hex/base64"
     }
  ]
  }
```

2.4 Mark message as read or unread : Flags a message as read or unread.

```
 Request format:
 POST /api/channel/<id>/<sequence>[?older=true]
 Authorization: <api-token>
 Content-type: application/json
 Content-length: ...
 {"read": true | false }
```

The optional older parameter allows a client to mark all messages with a sequence lower than or equal to the supplied <sequence> path argument as read in a single call.

Response format:
201 OK

In step 906 the access token or API tokens associated with a requested channel is provided to the client . If need be, in some embodiments, the access tokens may also be rescinded or revoked, for instance if the permissions have been amended or is no longer required by the client for a given channel.

Example schema for this is given below:

### 3.1 Generate Channel API Token

### Request format:

```
 POST /api/account/<account-id>/channel/<channel-id>/api-token
 Authorization: ...
 Content-type: application/json
 Content-length: ...
 {
  "description": "...",
  "can_read": true | false,
  "can_write": true | false
  }
```

### Response format:

This is the only API call that will return the token value. If it is lost, the token should be deleted and replaced with a new token.

```
 201 Created
 Content-type: application/json
 Content-length: ...
 {
  "id":
       "...",
  "token": "...",
  "description": "...",
  "can_read": true | false,
  "can_write": true | false
  }
 
```

### 1.6 Revoke Channel API Token :

```
Request format:
 DELETE /api/account/<account-id>/channel/<channel-id>/api-token/<token-id>
 Authorization: ...
```

### Response format:

204 No Content

Step 908 shows the provision of a notification or alert or any other information that is received for the client securely from the other entity (in the embodiment as set out in Figure 8, this entity is the miner) regarding a particular topic, such as a transaction. This is therefore referred as a call-back notification in relation to a particular transaction , which may have a TxID as mentioned in figure 8. This can be a notification of a change of state, or any other notification in instances where exceptions are raised regarding a given transaction or topic for which the channel is created.

Since the notification is received via the channel, the client does not need to be always online, and the notifications can be delivered asynchronously, whenever the client is connected or reconnected (online) with the channel processor. In some cases, settings may be provided that may impose a minimum time that the client should remain connected, or the setting may ensure that the client remains connected until all 'unread' alerts or notifications in the channel are consumed by the client or wallet associated with the client . Therefore, in some embodiments, the client may be allowed to disconnect once the notifications are consumed or received by it from the channel. There may be many such channels provided for a given client - one per topic or transaction.

In some embodiments, there may be an additional step to detect if the client is connected to the channel processor, i.e. is online or not , i.e. is offline. This may be done by known techniques to see of a network connections exists with the client when one or more notifications or messages arrive in the channel.

The call-back notifications or messages for the client once in the channel are 'pulled' by the client when online to ensure synchronisation , i.e. with the messages in the channels and the messages delivered to the client.

If the client is not connected, or offline when the channel notifications arrive, these are stored in a memory or cache that is associated with channel processor . This may be specific for a given client in some embodiments. Once the client is online, or when it is detected that the client is connected , then these notifications are pushed or provided to the client entity. Push notifications may be sent to the to the client so that they can obtain the data or unread messages in the channel. Thus, when the client is offline, the messages or notifications are stored by the channel service or channel processor. These are then provided to the client, once the client is online.

Although any type of message can be sent in the channel, where the other entity is the miner mining the transaction from the client, in most cases the scenarios for direct communication between the miner and the client are :
1. When the status of the transaction updates or changes
2. Upon receipt of ad-hoc requests for information from a miner

In the first scenario a call-back notification is raised whenever the client needs to be informed of a change of state or an exception, such as a double spend of a transaction. or to confirm mining, or to confirm the validity or invalidity of the transaction etc.

In the second scenario, the client can at a certain time, which may be periodic or arbitrary, request for a status update from the miner directly using the same channel.

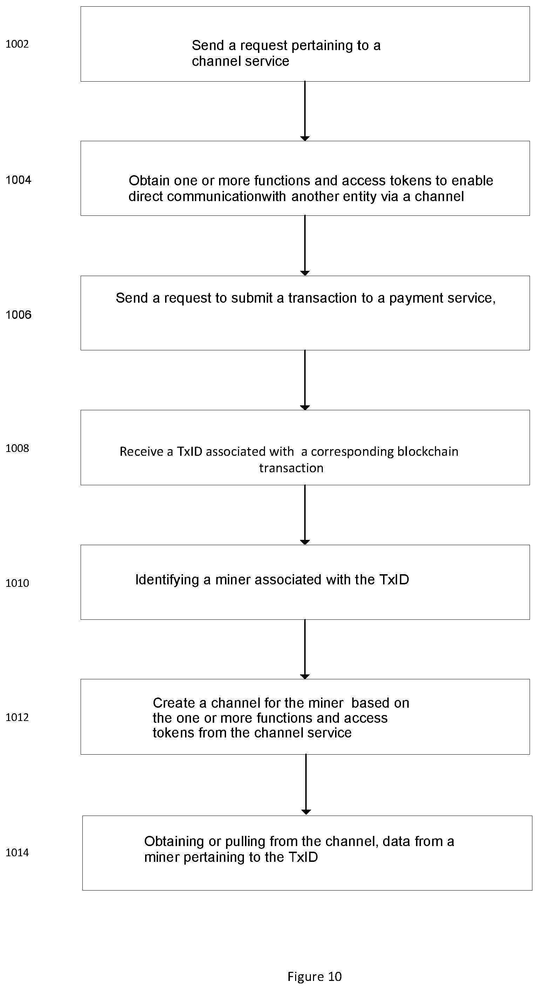

Figure 10 relates to a third implementation of the fourth aspect of the present disclosure where client is associated with a channel service implemented by the channel processor set out in Figure 9. This is for embodiments where the call-back identifier in Figure 8 is a channel created by the client using the channel service. The below steps in this figure depict an embodiment implemented by the client.

In step 1002 the client prepares a request for a channel service and sends it to the channel service (channel processor). The request prepared may be sent by the client using a Hypertext Transfer Protocol (HTTP) or similar transmission protocol format. In some embodiments, it is sent to the channel processor that is implemented as a HTTP or REST API, and the responses may also be provided to the client in the HTTP transmission protocol format. As mentioned above, the channel processor may be the same entity as the payment processor, or may be a separate entity.

The request in this embodiment relates to the creation of a channel that can enable, allow or provide a mechanism for direct communication with another entity, such as miner.

In step 1004, the one or more functions , such as channel or message functions/APIs are received from the channel processor to enable the client to create the channel to ensure direct communication with the other entity. This channel functions and messages functions are set out in step 904 of Figure 9, received from the channel processor. Message APIs as well as access tokens for the request as seen in step 906 are also received for the channel.

Step 1006 depicts sending a request to the payment processor to submit a transaction associated with a digital asset. This may be a payment transaction or similar that is associated with a customer of the client. This step is similar to step 208 of Figure 2, as also set out above in relation to step 802 of Figure 8. The request is sent via HTTP to the API for the payment processor and may be a POST request.

In Step 1008, a transaction identifier (TXID) is received from the payment processor. This is based on a response from a given miner , as explained in step 810 of Figure 8.

In step 1010, the client identifies or is made aware of the miner that has sent the TxID in the previous step to the payment processor. This may be based on an API or location or Miner ID and/or reputation that is associated with the miner, as discussed above in Figure 8.

In step 1012, the received APIs from the channel processor in step 1004 is then used to create a channel with the miner that has been identified in the previous step 1010. The received access tokens can be used to authenticate the other entity and provide access to various functions associated with the channel. In some embodiments, message APIs as well as access token may be sent to the other entity for communication via the channel. In some embodiments, following creation of the channel , a handshake protocol may take place between the client and the miner to establish a key for securing communications via the channel. Any known method such as the Noise Protocol Framework or the Libsodium key exchange mechanism may be used for this.

In step 1014 a response from the miner is received via the channel. This is possible as the other party, i.e. the miner, has received all the required message APIs and well as access tokens in the previous step for direct communication with then client. The response from the miner will be associated with the particular TxID in step 1008, and therefore the communication in the respective channel will be specific to that transaction identifier. The message can relate to any matter associated with the TxID . For instance, a notification may be sent via the channel to inform the client that the TxID is a double spend of an earlier transaction . This may be the case if the transaction is already be present in a temporary memory pool. Otherwise, once the transaction in included in a block, the message may be associated with the Merkle proof of mining for the transaction.

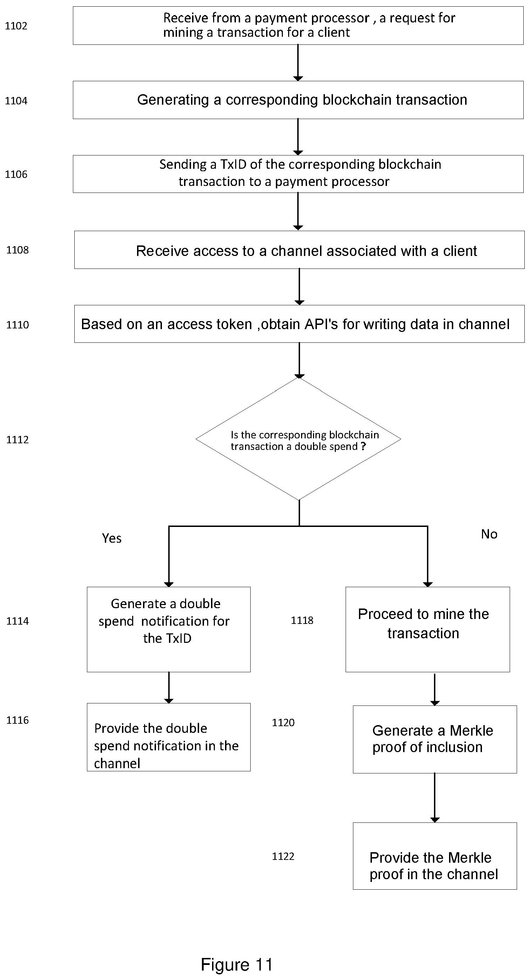

Figure 11 relates to a fourth implementation of the fourth aspect of the present disclosure where client is associated with a channel service implemented by the channel processor set out in Figure 9. This is for embodiments where the call-back identifier in Figure 8 is a channel created by the client using the channel service. The below steps in this figure depict an embodiment implemented by the miner .

In step 1102, a request is received by the miner from the payment processor for mining a transaction, as seen in step 804 of Figure 8.

In step 1104, the miner generates a blockchain transaction. This step is similar to step 310 of Figure 3 where in some embodiments, a hex-encoded raw transaction corresponding to the submitted transaction is generated. An output script or UTXO is thus provided , which includes a transaction identifier (TxID) associated with the corresponding blockchain transaction that has been created by the respective miner. The output script( UTXO) for the blockchain transaction may then be added to the mempool associated with the miner for mining instantaneously or at a later time.

In step 1106 this transaction identifier (TxID) for the corresponding blockchain transaction is then sent to the client via the payment processor, so that the client can have access to the TxID and may also identify the miner .

In step 1110 , once the client creates a channel using the channel service for communication directly with the miner, the miner receives access to the channel from the client with any associated message APIs and access tokens.

In step 1112, the miner checks if the transaction submitted in step 1102 is a double spend of a previous transaction. As mentioned above , this could be implemented by checking if the same transaction exists in a secondary or temporary memory pool associated with the miner or if it has already been mined in the blockchain

If this is the case, the miner then generates a double spend notification or alert to send back to the client using the channel. The double spend notification is raised when a miner, who is incentivised to maintain their reputation , which may be tracked via their Miner ID, notifies the client of an attempt to spend digital assets, such as BSV that has been previously spent by the same client (i.e. a merchant wallet).

One version of the example schema may be :

```
Request:
 {
 "txId": "tx_Id"
 "callbackURL": "/api/v1/ccount/1/channel/<channel-id>",
 "type": "doubleSpend"
 }
 Response:
 {
 "apiVersion": "0.1.1",
 "timestamp": "2020-07-15T11:40:29.826Z",
 "minerld": "03fcfcfcd0841b0a6ed2057fa8ed404788de47ceb3390c53e79c4ecd1e05819031",
 "BlockHash":"986544449afaec80fcabbbf08dcd82d392cf68c9a13fe29da1a0ccfnrhr",
 "BlockHeight": 207,
 "callbackTxId":"6bdbcfab0526d30e8d68279f79dff61fb4026ace8b7b32789af016336e54f2f0",
 "callbackReason ":"doubleSpend"
 }
 
```

Another version of the example schema for a double spend notification is given below:

```
Request:
 POST /mapi/tx
 body: when Content-Type is application/json:
 {
 "rawtx": "[transaction_hex_string]",
 "callBackUrl": "https://your.service.callback/endpoint",
 "callBackToken": "Authorization: <your_authorization_header>",
 "merkleProof": false,
 "dsCheck": true,
 "callBackEncryption": <parameter>
 }
 Response:
 {
 "apiVersion": "0.1.2",
 "timestamp": "2020-01-15T11:40:29.826Z",
 "txid": "6bdbcfab0526d30e8d68279f79dff61fb4026ace8b7b32789af016336e54f2f0",
 "returnResult": "success",
 "resultDescription": "",
 "minerld": "03fcfcfcd0841b0abed2057fa8ed404788de47ceb3390c53e79c4ecd1e05819031",
 "currentHighestBlockHash":
 "71a7374389afaec80fcabbbf08dcd82d392cf68c9a13fe29da1a0c853facef01",
 "currentHighestBlockHeight": 207,
 "txSecondMempoolExpiry": 0,
 "conflictedWith": ""
 }
```

In step 1116 the double spend call-back notification or the "callbackpayload" as seen above is sent to the callbackURL, which in this embodiment is a channel that the miner has received access to. The channel may be identified by an API or a location or an identifier. The notification is added into the channel using the message APIs and the access tokens that are associated with the channel to which the miner has been provided access.

If the transaction submitted in step 1102, is not a double spend, then in step 1118, the miner proceeds to mine the transaction in a block associated with a blockchain using known techniques for mining, some of which is discussed in the background of the present application.

In step 1120, the miner then generate a proof of inclusion of the transaction into a block. In some embodiments, the proof may be a Merkle tree proof. This is a known authenticated data structure organized as a tree. The hash of each data block is stored in a node on the base layer, or leaf, and every internal node of the tree, or branch, contains a cryptographic hash that is computed from the hashes of its two child/sibling nodes. The top node of the tree, the Merkle root, uniquely identifies the dataset from which the tree was constructed. Thus, Merkle trees allow for an efficient proof-of-inclusion, where a miner or a prover node shows to a submitter or a verifier node that a certain data block is part of the authenticated dataset by sending them a proof with an audit path. The audit path contains the node hashes necessary to recalculate the Merkle root, without requiring the submitter to reveal the whole dataset. In Bitcoin SV, the transactions contained in a block are stored in a Merkle tree.

The example schema may be :

```
 Request:
 {
 "txId": "tx_Id"
 "callbackURL": "/api/v1/account/1/channel/<channel-id>",
 "type": "merkleproof"
 }
 Response:
 {
 "apiVersion": "0.1.1",
 "timestamp": "2020-07-15T11:40:29.826Z",
 "minerld": "03fcfcfcd0841b0a6ed2057fa8ed404788de47ceb3390c53e79c4ecd1e05819031",
 "BlockHash":"986544449afaec80fcabbbf08dcd82d392cf68c9a13fe29da1a0ccfnrhr",
 "BlockHeight": 207,
 "callbackTxId":"6bdbcfab0526d30e8d68279f79dff61fb4026ace8b7b32789af016336e54f2f0",
 "callbackReason ":""
 }
```

Another version of the example schema for a Merkle proof notification is given below:

```
 Request:
 POST /mapi/tx
 body: when Content-Type is application/json:
 {
 "rawtx": "[transaction_hex_string]",
 "callBackUrl": "https://your.service.callback/endpoint",
 "callBackToken": "Authorization: <your_authorization_header>",
 "merkleProof": true,
 "dsCheck": false,
 "callBackEncryption": <parameter>
 }
 Response:
 {
 "apiVersion": "0.1.2",
 "timestamp": "2020-01-15T11:40:29.826Z",
 "txid": "6bdbcfab0526d30e8d68279f79dff61fb4026ace8b7b32789af016336e54f2f0",
 "returnResult": "success",
 "resultDescription": "",
                                                                                "minerId":
 "03fcfcfcd0841b0a6ed2057fa8ed404788de47ceb3390c53e79c4ecd1e05819031",
                                                               "currentHighestBlockHash":
 "71a7374389afaec80fcabbbf08dcd82d392cf68c9a13fe29da1a0c853facef01",
 "currentHighestBlockHeight": 207,
 "txSecondMempoolExpiry": 0,
 "conflictedWith": ""
 }
```

In step 1122 the miner sends a proof of inclusion proof of the transaction in the blockchain directly to the client using the channel it has access to. Thus, there is no requirement for the client or payment processor to have to run a copy of or search the blockchain to find said transaction.

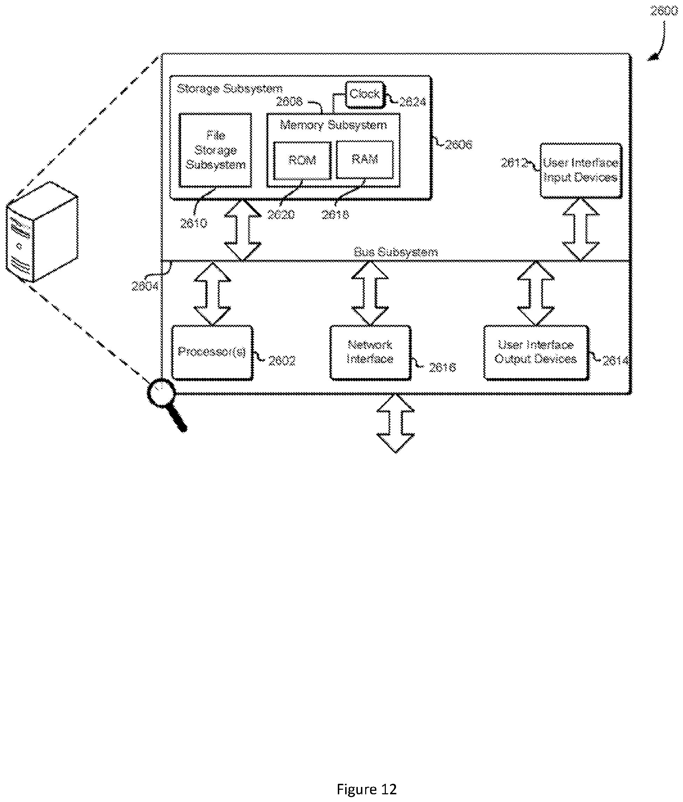

Turning now to Figure 12, there is provided an illustrative, simplified block diagram of a computing device 2600 that may be used to practice at least one embodiment of the present disclosure. In various embodiments, the computing device 2600 may be used to implement any of the systems illustrated and described above. For example, the computing device 2600 may be configured to be used as one or more components of DBMS of figure, or the computing device 2600 may be configured to be a client entity that is associated with a given user, the client entity making database requests for a database that is managed by the DBMS of Figure 12. Thus, computing device 2600 may be a portable computing device, a personal computer, or any electronic computing device. As shown in Figure 12, the computing device 2600 may include one or more processors with one or more levels of cache memory and a memory controller (collectively labelled 2602) that can be configured to communicate with a storage subsystem 2606 that includes main memory 2608 and persistent storage 2610. The main memory 2608 can include dynamic random-access memory (DRAM) 2618 and read-only memory (ROM) 2620 as shown. The storage subsystem 2606 and the cache memory 2602 and may be used for storage of information, such as details associated with transactions and blocks as described in the present disclosure. The processor(s) 2602 may be utilized to provide the steps or functionality of any embodiment as described in the present disclosure.

The processor(s) 2602 can also communicate with one or more user interface input devices 2612, one or more user interface output devices 2614, and a network interface subsystem 2616.

A bus subsystem 2604 may provide a mechanism for enabling the various components and subsystems of computing device 2600 to communicate with each other as intended. Although the bus subsystem 2604 is shown schematically as a single bus, alternative embodiments of the bus subsystem may utilise multiple buses.

The network interface subsystem 2616 may provide an interface to other computing devices and networks. The network interface subsystem 2616 may serve as an interface for receiving data from, and transmitting data to, other systems from the computing device 2600. For example, the network interface subsystem 2616 may enable a data technician to connect the device to a network such that the data technician may be able to transmit data to the device and receive data from the device while in a remote location, such as a data centre.

The user interface input devices 2612 may include one or more user input devices such as a keyboard; pointing devices such as an integrated mouse, trackball, touchpad, or graphics tablet; a scanner; a barcode scanner; a touch screen incorporated into the display; audio input devices such as voice recognition systems, microphones; and other types of input devices. In general, use of the term "input device" is intended to include all possible types of devices and mechanisms for inputting information to the computing device 2600.

The one or more user interface output devices 2614 may include a display subsystem, a printer, or non-visual displays such as audio output devices, etc. The display subsystem may be a cathode ray tube (CRT), a flat-panel device such as a liquid crystal display (LCD), light emitting diode (LED) display, or a projection or other display device. In general, use of the term "output device" is intended to include all possible types of devices and mechanisms for outputting information from the computing device 2600. The one or more user interface output devices 2614 may be used, for example, to present user interfaces to facilitate user interaction with applications performing processes described and variations therein, when such interaction may be appropriate.

The storage subsystem 2606 may provide a computer-readable storage medium for storing the basic programming and data constructs that may provide the functionality of at least one embodiment of the present disclosure. The applications (programs, code modules, instructions), when executed by one or more processors, may provide the functionality of one or more embodiments of the present disclosure, and may be stored in the storage subsystem 2606. These application modules or instructions may be executed by the one or more processors 2602. The storage subsystem 2606 may additionally provide a repository for storing data used in accordance with the present disclosure. For example, the main memory 2608 and cache memory 2602 can provide volatile storage for program and data. The persistent storage 2610 can provide persistent (non-volatile) storage for program and data and may include flash memory, one or more solid state drives, one or more magnetic hard disk drives, one or more floppy disk drives with associated removable media, one or more optical drives (e.g. CD-ROM or DVD or Blue-Ray) drive with associated removable media, and other like storage media. Such program and data can include programs for carrying out the steps of one or more embodiments as described in the present disclosure as well as data associated with transactions and blocks as described in the present disclosure.

The computing device 2600 may be of various types, including a portable computer device, tablet computer, a workstation, or any other device described below. Additionally, the computing device 2600 may include another device that may be connected to the computing device 2600 through one or more ports (e.g., USB, a headphone jack, Lightning connector, etc.). The device that may be connected to the computing device 2600 may include a plurality of ports configured to accept fibre-optic connectors. Accordingly, this device may be configured to convert optical signals to electrical signals that may be transmitted through the port connecting the device to the computing device 2600 for processing. Due to the ever-changing nature of computers and networks, the description of the computing device 2600 depicted in Figure 12 is intended only as a specific example for purposes of illustrating the preferred embodiment of the device. Many other configurations having more or fewer components than the system depicted in Figure 12 are possible.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer implemented method of providing a payment service for one or more clients for transactions associated with a blockchain, the method implemented by a payment processor (404) and comprising the steps of:
receiving (802) a request from a given client (402) among the one or more clients, the request being to submit to the blockchain a transaction associated with a digital asset, the request associated with a call-back identifier for enabling direct communication between the given client and another entity for the transaction;
submitting (804) the transaction associated with the request to a given miner among a plurality of miners (412), for including the transaction in the blockchain;
identifying (806) the given miner to the client;
providing (808) the call-back identifier to the miner;
responsive to receiving a response pertaining to a corresponding blockchain transaction for the request from the given miner, the method further includes:
enabling or processing (812) for the client at least one call-back notification pertaining to the corresponding blockchain transaction provided by the miner, the call-back notification being based on the call-back identifier associated with the request.

2. The method as claimed in claim 1 wherein the received response from the miner is associated with a transaction identifier (TxID), the method further including sending a transaction identifier (TxID) for the corresponding blockchain transaction to the client.

3. The method as claimed in any preceding claim wherein the received response is an output script associated with the blockchain transaction, the output script including an Unspent Transaction Output (UTXO) associated with a mempool for the miner, the UTXO including the transaction identifier (TxID) for the blockchain transaction.

4. The method as claimed in any preceding claim wherein the payment processor is implemented as a Representational State Transfer (REST) endpoint for the one or more clients, and wherein the method further comprises the step of providing an application programming interface (API) gateway associated with the payment processor for performing the steps of:
receiving the request from the client using a Hypertext Transfer Protocol Secure (HTTPS) transmission protocol format;
converting the respective request to a Remote Procedure Call (RPC) format, and submitting the RPC to the miner;
receiving a response associated with a corresponding blockchain transaction from the miner in an RPC format; and
converting the respective response for sending to the client using the HTTPS transmission protocol.

5. The method as claimed in any preceding claim comprising the step of verifying the identity of the given miner, wherein the verification is based on a digital signature associated with the given miner, or based on an identifier pertaining to the given miner, said identifier being optionally associated with a reputation indicator for the given miner.

6. The method as claimed in any preceding claim wherein the call-back notification relates to a notification of a double-spend of the transaction submitted by the given client, or wherein the call-back notification relates to a proof of inclusion in the blockchain of the transaction submitted by the given client.

7. The method as claimed in any preceding claim, wherein the call-back identifier is a location for a channel associated with the client, or wherein the call-back identifier is a Universal Resource Identifier (URI) for the client.

8. The method as claimed in claim 7, further comprising the step of providing the given miner access to the channel, wherein the step of providing includes, providing a channel identifier or location for the channel associated with the request, and one or more access tokens associated with the channel to the miner.

9. A computing device (2600) comprising a first processor (2602) and first memory (2608), the first memory including first executable instructions that, as a result of execution by the first processor, causes the device to perform the computer-implemented method as claimed in any one of claims 1 to 8, the computing device pertaining to a payment processor.

10. A computer system comprising:
a payment processor (404) communicatively coupled to at least one client and at least one miner via a wireless communication network, wherein the payment processor is implemented in accordance with the computing device as claimed in claim 9;
a client (402) communicatively coupled to the payment processor via the wireless communication network, and being capable of communication with at least one customer; wherein the client is implemented as a computing device comprising a second processor and second memory;
the client communicatively coupled to a channel processor via the wireless communication network, wherein the channel processor is implemented as a computing device comprising a third processor and third memory; and
a plurality of miners (412) communicatively coupled to the payment processor via the wireless communication network, each miner being implemented as a computing device comprising a fourth processor and fourth memory.

11. The computer system as claimed in claim 10, the second memory including second executable instructions that, as a result of execution by the second processor, causes the client to perform the computer-implemented method of:
sending (1002) a channel request pertaining to a channel service, the channel service implemented by a channel processor, the request relating to creation of a channel for communication with another entity;
obtaining (1004) from the channel service access to one or more functions that enable direct communication between the given client and the other entity, said one or more functions including channel functions or procedures pertaining to a channel for transmission of data, and/or message functions or procedures pertaining to the data being transmitted using a channel;
obtaining from the channel service one or more access tokens, said access tokens enabling secure communication with the other entity;
sending (1006) to a payment processor implementing a payment service, a request to submit to the blockchain a transaction associated with a digital asset;
obtaining (1008) from the payment processor a transaction identifier (TxID) for a blockchain transaction corresponding to the submitted transaction;
identifying (1010) a miner associated with the corresponding blockchain transaction based on a response from the payment processor;
using one or more channel functions received from the channel processor, creating (1012) a given channel for communication with the identified miner;
sending the one or more access tokens associated with the given channel to the miner; and
receiving (1014) at least one call-back notification associated with the given channel, the notification pertaining to data in the given channel associated with the blockchain transaction, said data provided by the miner.

12. The computer system as claimed in either of claims 10 or 11 the third memory including third executable instructions that, as a result of execution by the third processor, causes the channel processor to perform the computer-implemented method of:
receiving (902) a request from a given client among the one or more clients, the request pertaining to creation of a channel;
providing (904) the given client access to one or more functions that enable direct communication between the given client and another entity via the channel, wherein said one or more functions include channel functions or procedures pertaining to the channel for transmission of data; and/or message functions or procedures pertaining to the data being transmitted using the channel;
issuing (906) one or more access tokens for the channel, said one or more access tokens being configured for secure communication with another entity via the channel, and
storing and/or providing (908) one or more notifications associated with the channel for the given client.

13. The computer system as claimed in any of claims 10 to 12, the fourth memory including fourth executable instructions that, as a result of execution by the fourth processor, causes the miner to perform the computer-implemented method of:
receiving (1102) a request for submission of a transaction to the blockchain from the payment processor;
generating (1104) a blockchain transaction corresponding the request;
sending (1106) an output script (UTXO) associated with the blockchain transaction to the payment processor, wherein the output script incudes a transaction identifier (TxID) associated with the corresponding blockchain transaction;
receiving (1108) access to a channel, the channel enabling direct communication with the given client;
based on an access token associated with the channel, obtaining (1110) a message function or a message API for providing or writing data associated with a call-back notification in the channel, the data pertaining to the corresponding blockchain transaction.

14. A computer-readable storage medium having stored thereon executable instructions that, as a result of being executed by a processor of a computer, cause the computer to perform the method of any one of claims 1 to 8.

## Patentansprüche

1. Ein computerimplementiertes Verfahren zum Bereitstellen eines Zahlungsdienstes für einen oder mehrere Clients für mit einer Blockchain assoziierte Transaktionen, wobei das Verfahren durch einen Zahlungsprozessor (404) implementiert wird und die folgenden Schritte beinhaltet:
Empfangen (802) einer Anforderung von einem gegebenen Client (402) unter dem einen oder den mehreren Clients, wobei die Anforderung darin besteht, eine mit einem digitalen Vermögenswert assoziierte Transaktion an die Blockchain zu übermitteln,
wobei die Anforderung mit einer Rückrufkennung zum Ermöglichen einer direkten Kommunikation zwischen dem gegebenen Client und einer anderen Entität für die Transaktion assoziiert ist;
Übermitteln (804) der mit der Anforderung assoziierten Transaktion an einen gegebenen Miner unter einer Vielzahl von Minern (412) zur Aufnahme der Transaktion in die Blockchain;
Identifizieren (806) des gegebenen Miners für den Client;
Bereitstellen (808) der Rückrufkennung an den Miner;
als Reaktion auf das Empfangen einer Antwort, die eine entsprechende Blockchaintransaktion für die Anforderung von dem gegebenen Miner betrifft, umfasst das Verfahren ferner:
Aktivieren oder Verarbeiten (812) mindestens einer Rückrufbenachrichtigung für den Client, die die durch den Miner bereitgestellte entsprechende Blockchaintransaktion betrifft, wobei die Rückrufbenachrichtigung auf der mit der Anforderung assoziierten Rückrufkennung basiert.

2. Das Verfahren gemäß Anspruch 1, wobei die empfangene Antwort von dem Miner mit einer Transaktionskennung (TxID) assoziiert ist, wobei das Verfahren ferner Senden einer Transaktionskennung (TxID) für die entsprechende Blockchaintransaktion an den Client umfasst.

3. Das Verfahren gemäß einem der vorhergehenden Ansprüche, wobei die empfangene Antwort ein mit der Blockchaintransaktion assoziiertes Ausgabeskript ist, wobei das Ausgabeskript einen mit einem Mempool für den Miner assoziierten Unspent Transaction Output (UTXO) umfasst, wobei der UTXO die Transaktionskennung (TxID) für die Blockchaintransaktion umfasst.

4. Das Verfahren gemäß einem der vorhergehenden Ansprüche, wobei der Zahlungsprozessor als ein Representational-State-Transfer(REST)-Endpunkt für den einen oder die mehreren Clients implementiert ist und wobei das Verfahren ferner den Schritt des Bereitstellens eines mit dem Zahlungsprozessor assoziierten Anwendungsprogrammierschnittstellen(API)-Gateways zum Durchführen der folgenden Schritte beinhaltet:
Empfangen der Anforderung von dem Client unter Verwendung eines Hypertext-Transfer-Protocol-Secure(HTTPS)-Übertragungsprotokoll-Formats;
Umwandeln der jeweiligen Anforderung in ein Remote-Procedure-Call(RPC)-Format und übermitteln des RPC an den Miner;
Empfangen einer mit einer entsprechenden Blockchaintransaktion assoziierten Antwort von dem Miner in einem RPC-Format; und
Umwandeln der jeweiligen Antwort zum Senden an den Client unter Verwendung des HTTPS-Übertragungsprotokolls.

5. Das Verfahren gemäß einem der vorhergehenden Ansprüche, das den Schritt des Verifizierens der Identität des gegebenen Miners beinhaltet, wobei die Verifizierung auf einer mit dem gegebenen Miner assoziierten digitalen Signatur basiert oder auf einer den gegebenen Miner betreffenden Kennung basiert, wobei die Kennung optional mit einem Reputationsindikator für den gegebenen Miner assoziiert ist.

6. Das Verfahren gemäß einem der vorhergehenden Ansprüche, wobei die Rückrufbenachrichtigung mit einer Benachrichtigung über einen Double-Spend der durch den gegebenen Client übermittelten Transaktion in Zusammenhang steht oder wobei die Rückrufbenachrichtigung mit einem Nachweis der Aufnahme der durch den gegebenen Client übermittelten Transaktion in die Blockchain in Zusammenhang steht.

7. Das Verfahren gemäß einem der vorhergehenden Ansprüche, wobei die Rückrufkennung ein Ort für einen mit dem Client assoziierten Kanal ist oder wobei die Rückrufkennung ein Universal Resource Identifier (URI) für den Client ist.

8. Das Verfahren gemäß Anspruch 7, das ferner den Schritt des Bereitstellens eines Zugriffs auf den Kanal für den gegebenen Miner beinhaltet, wobei der Schritt des Bereitstellens Bereitstellen einer Kanalkennung oder eines Kanalorts für den mit der Anforderung assoziierten Kanal und eines oder mehrerer mit dem Kanal assoziierter Zugriffstokens an den Miner umfasst.

9. Eine Rechenvorrichtung (2600), die einen ersten Prozessor (2602) und einen ersten Speicher (2608) beinhaltet, wobei der erste Speicher erste ausführbare Anweisungen umfasst, die infolge einer Ausführung durch den ersten Prozessor bewirken, dass die Vorrichtung das computerimplementierte Verfahren gemäß einem der Ansprüche 1 bis 8 durchführt, wobei die Rechenvorrichtung einen Zahlungsprozessor betrifft.

10. Ein Computersystem, das Folgendes beinhaltet:
einen Zahlungsprozessor (404), der über ein Drahtloskommunikationsnetz kommunikativ mit mindestens einem Client und mindestens einem Miner gekoppelt ist, wobei der Zahlungsprozessor entsprechend der Rechenvorrichtung gemäß Anspruch 9 implementiert ist;
einen Client (402), der über das Drahtloskommunikationsnetz kommunikativ mit dem Zahlungsprozessor gekoppelt ist und zur Kommunikation mit mindestens einem Kunden in der Lage ist; wobei der Client als eine Rechenvorrichtung implementiert ist, die einen zweiten Prozessor und einen zweiten Speicher beinhaltet;
wobei der Client über das Drahtloskommunikationsnetz kommunikativ mit einem Kanalprozessor gekoppelt ist, wobei der Kanalprozessor als eine Rechenvorrichtung implementiert ist, die einen dritten Prozessor und einen dritten Speicher beinhaltet; und
eine Vielzahl von Minern (412), die über das Drahtloskommunikationsnetz kommunikativ mit dem Zahlungsprozessor gekoppelt sind, wobei jeder Miner als eine Rechenvorrichtung implementiert ist, die einen vierten Prozessor und einen vierten Speicher beinhaltet.

11. Das Computersystem gemäß Anspruch 10, wobei der zweite Speicher zweite ausführbare Anweisungen umfasst, die infolge einer Ausführung durch den zweiten Prozessor bewirken, dass der Client das computerimplementierte Verfahren durchführt, das aus Folgendem besteht:
Senden (1002) einer Kanalanforderung, die einen Kanaldienst betrifft, wobei der Kanaldienst durch einen Kanalprozessor implementiert wird, wobei die Anforderung mit der Erstellung eines Kanals zur Kommunikation mit einer anderen Entität in Zusammenhang steht;
Erhalten (1004), von dem Kanaldienst, eines Zugriffs auf eine oder mehrere Funktionen, die eine direkte Kommunikation zwischen dem gegebenen Client und der anderen Entität ermöglichen, wobei die eine oder die mehreren Funktionen Kanalfunktionen oder Prozeduren, die einen Kanal zur Übertragung von Daten betreffen, und/oder Nachrichtenfunktionen oder Prozeduren, die die unter Verwendung eines Kanals übertragenen Daten betreffen, umfassen;
Erhalten, von dem Kanaldienst, eines oder mehrerer Zugriffstokens, wobei die Zugriffstokens eine sichere Kommunikation mit der anderen Entität ermöglichen;
Senden (1006), an einen Zahlungsprozessor, der einen Zahlungsdienst implementiert, einer Anforderung zum Übermitteln einer mit einem digitalen Vermögenswert assoziierten Transaktion an die Blockchain;
Erhalten (1008), von dem Zahlungsprozessor, einer Transaktionskennung (TxID) für eine Blockchaintransaktion, die der übermittelten Transaktion entspricht;
Identifizieren (1010) eines mit der entsprechenden Blockchaintransaktion assoziierten Miners basierend auf einer Antwort von dem Zahlungsprozessor;
unter Verwendung einer oder mehrerer von dem Kanalprozessor empfangener Kanalfunktionen, Erstellen (1012) eines gegebenen Kanals zur Kommunikation mit dem identifizierten Miner;
Senden des einen oder der mehreren mit dem gegebenen Kanal assoziierten Zugriffstokens an den Miner; und
Empfangen (1014) mindestens einer mit dem gegebenen Kanal assoziierten Rückrufbenachrichtigung, wobei die Benachrichtigung Daten in dem mit der Blockchaintransaktion assoziierten gegebenen Kanal betrifft, wobei die Daten durch den Miner bereitgestellt werden.

12. Das Computersystem gemäß Anspruch 10 oder 11, wobei der dritte Speicher dritte ausführbare Anweisungen umfasst, die infolge einer Ausführung durch den dritten Prozessor bewirken, dass der Kanalprozessor das computerimplementierte Verfahren durchführt, das aus Folgendem besteht:
Empfangen (902) einer Anforderung von einem gegebenen Client unter dem einen oder den mehreren Clients, wobei die Anforderung die Erstellung eines Kanals betrifft;
Bereitstellen (904) eines Zugriffs für den gegebenen Client auf eine oder mehrere Funktionen, die eine direkte Kommunikation zwischen dem gegebenen Client und einer anderen Entität über den Kanal ermöglichen, wobei die eine oder die mehreren Funktionen Kanalfunktionen oder Prozeduren, die den Kanal zur Übertragung von Daten betreffen; und/oder Nachrichtenfunktionen oder Prozeduren, die die unter Verwendung des Kanals übertragenen Daten betreffen, umfassen;
Ausgeben (906) eines oder mehrerer Zugriffstokens für den Kanal, wobei das eine oder die mehreren Zugriffstokens für eine sichere Kommunikation mit einer anderen Entität über den Kanal konfiguriert sind, und
Speichern und/oder Bereitstellen (908) einer oder mehrerer mit dem Kanal assoziierter Benachrichtigungen für den gegebenen Client.

13. Das Computersystem gemäß einem der Ansprüche 10 bis 12, wobei der vierte Speicher vierte ausführbare Anweisungen umfasst, die infolge einer Ausführung durch den vierten Prozessor bewirken, dass der Miner das computerimplementierte Verfahren durchführt, das aus Folgendem besteht:
Empfangen (1102) einer Anforderung zur Übermittlung einer Transaktion an die Blockchain von dem Zahlungsprozessor;
Erzeugen (1104) einer Blockchaintransaktion, die der Anforderung entspricht;
Senden (1106) eines mit der Blockchaintransaktion assoziierten Ausgabeskripts (UTXO) an den Zahlungsprozessor, wobei das Ausgabeskript eine mit der entsprechenden Blockchaintransaktion assoziierte Transaktionskennung (TxID) umfasst;
Empfangen (1108) eines Zugriffs auf einen Kanal, wobei der Kanal eine direkte Kommunikation mit dem gegebenen Client ermöglicht;
basierend auf einem mit dem Kanal assoziierten Zugriffstoken, Erhalten (1110) einer Nachrichtenfunktion oder einer Nachrichten-API zum Bereitstellen oder Schreiben von mit einer Rückrufbenachrichtigung assoziierten Daten in dem Kanal, wobei die Daten die entsprechende Blockchaintransaktion betreffen.

14. Ein computerlesbares Speichermedium, auf dem ausführbare Anweisungen gespeichert sind, die infolge einer Ausführung durch einen Prozessor eines Computers bewirken, dass der Computer das Verfahren gemäß einem der Ansprüche 1 bis 8 durchführt.

## Revendications

1. Un procédé mis en œuvre par ordinateur pour fournir un service de paiement pour un ou plusieurs clients pour des transactions associées à une chaîne de blocs, le procédé étant mis en œuvre par un processeur de paiement (404) et comprenant les étapes suivantes :
recevoir (802) une demande en provenance d'un client donné (402) parmi les un ou plusieurs clients, la demande consistant à soumettre, à la chaîne de blocs, une transaction associée à un actif numérique, la demande étant associée à un identifiant de rappel pour permettre une communication directe entre le client donné et une autre entité pour la transaction ;
soumettre (804) la transaction associée à la demande à un explorateur donné parmi une pluralité d'explorateurs (412), pour inclure la transaction dans la chaîne de blocs ;
identifier (806) l'explorateur donné auprès du client ;
fournir (808) l'identifiant de rappel à l'explorateur ;
en réponse à la réception d'une réponse relative à une transaction par chaîne de blocs correspondante pour la demande en provenance de l'explorateur donné, le procédé inclut en outre :
le fait de permettre ou de traiter (812) pour le client au moins une notification de rappel relative à la transaction par chaîne de blocs correspondante fournie par l'explorateur, la notification de rappel étant basée sur l'identifiant de rappel associé à la demande.

2. Le procédé tel que revendiqué dans la revendication 1, dans lequel la réponse reçue en provenance de l'explorateur est associée à un identifiant de transaction (TxID), le procédé incluant en outre le fait d'envoyer un identifiant de transaction (TxID) pour la transaction par chaîne de blocs correspondante au client.

3. Le procédé tel que revendiqué dans une quelconque revendication précédente, dans lequel la réponse reçue est un script de sortie associé à la transaction par chaîne de blocs, le script de sortie incluant une UTXO, « Unspent Transaction Output », associée à un bassin de transaction pour l'explorateur, l'UTXO incluant l'identifiant de transaction (TxID) pour la transaction par chaîne de blocs.

4. Le procédé tel que revendiqué dans une quelconque revendication précédente, dans lequel le processeur de paiement est mis en œuvre sous forme de terminal REST, « Representational State Transfer », pour les un ou plusieurs clients, et le procédé comprenant en outre l'étape consistant à fournir une passerelle API, « Application Programming Interface », associée au processeur de paiement pour réaliser les étapes suivantes :
recevoir la demande en provenance du client en utilisant un format de protocole de transmission HTTPS, « Hypertext Transfer Protocol Secure » ;
convertir la demande respective en un format RPC, « Remote Procedure Call », et soumettre le RPC à l'explorateur ;
recevoir une réponse associée à une transaction par chaîne de blocs correspondante en provenance de l'explorateur dans un RPC format ; et
convertir la réponse respective pour l'envoi au client en utilisant le protocole de transmission HTTPS.

5. Le procédé tel que revendiqué dans une quelconque revendication précédente,
comprenant l'étape consistant à vérifier l'identité de l'explorateur donné, la vérification étant basée sur une signature numérique associée à l'explorateur donné, ou basée sur un identifiant relatif à l'explorateur donné, ledit identifiant étant facultativement associé à un indicateur de réputation pour l'explorateur donné.

6. Le procédé tel que revendiqué dans une quelconque revendication précédente, dans lequel la notification de rappel concerne une notification d'une double dépense de la transaction soumise par le client donné, ou dans lequel la notification de rappel concerne une preuve d'inclusion dans la chaîne de blocs de la transaction soumise par le client donné.

7. Le procédé tel que revendiqué dans une quelconque revendication précédente, dans lequel l'identifiant de rappel est un emplacement pour un canal associé au client, ou dans lequel l'identifiant de rappel est un URI, « Universal Resource Identifier », pour le client.

8. Le procédé tel que revendiqué dans la revendication 7, comprenant en outre l'étape consistant à fournir à l'explorateur donné l'accès au canal, l'étape consistant à fournir incluant le fait de fournir un identifiant ou emplacement de canal pour le canal associé à la demande, et un ou plusieurs jetons d'accès associés au canal à l'explorateur.

9. Un dispositif informatique (2600), comprenant un premier processeur (2602) et une première mémoire (2608), la première mémoire incluant des premières instructions exécutables qui, en conséquence d'exécution par le premier processeur, amènent le dispositif à réaliser le procédé mis en œuvre par ordinateur tel que revendiqué dans l'une quelconque des revendications 1 à 8, le dispositif informatique étant relatif à un processeur de paiement.

10. Un système d'ordinateur, comprenant :
un processeur de paiement (404) couplé en communication à au moins un client et à au moins un explorateur par l'intermédiaire d'un réseau de communication sans fil, le processeur de paiement étant mis en œuvre conformément au dispositif informatique tel que revendiqué dans la revendication 9 ;
un client (402) couplé en communication au processeur de paiement par l'intermédiaire du réseau de communication sans fil, et capable de communication avec au moins un acheteur ; le client étant mis en œuvre sous forme de dispositif informatique comprenant un deuxième processeur et une deuxième mémoire ;
le client étant couplé en communication à un processeur de canal par l'intermédiaire du réseau de communication sans fil, le processeur de canal étant mis en œuvre sous forme de dispositif informatique comprenant un troisième processeur et une troisième mémoire ; et
une pluralité d'explorateurs (412) couplés en communication au processeur de paiement par l'intermédiaire du réseau de communication sans fil, chaque explorateur étant mis en œuvre sous forme de dispositif informatique comprenant un quatrième processeur et une quatrième mémoire.

11. Le système d'ordinateur tel que revendiqué dans la revendication 10, la deuxième mémoire incluant des deuxièmes instructions exécutables qui, en conséquence d'exécution par le deuxième processeur, amènent le client à réaliser le procédé mis en œuvre par ordinateur suivant :
envoyer (1002) une demande de canal relatif à un service de canal, le service de canal étant mis en œuvre par un processeur de canal, la demande concernant la création d'un canal pour communication avec une autre entité ;
obtenir (1004) auprès du service de canal l'accès à une ou plusieurs fonctions qui permettent la communication directe entre le client donné et l'autre entité, lesdites une ou plusieurs fonctions incluant des fonctions ou procédures de canal relatives à un canal pour transmission de données, et/ou des fonctions ou procédures de message relatives aux données transmises en utilisant un canal ;
obtenir auprès du service de canal un ou plusieurs jetons d'accès, lesdits jetons d'accès permettant une communication sécurisée avec l'autre entité ;
envoyer (1006) à un processeur de paiement mettant en œuvre un service de paiement, une demande de soumettre à la chaîne de blocs une transaction associée à un actif numérique ;
obtenir (1008) auprès du processeur de paiement un identifiant de transaction (TxID) pour une transaction par chaîne de blocs correspondant à la transaction soumise ;
identifier (1010) un explorateur associé à la transaction par chaîne de blocs correspondante sur la base d'une réponse provenant du processeur de paiement ;
en utilisant une ou plusieurs fonctions de canal reçues en provenance du processeur de canal, créer (1012) un canal donné pour communication avec l'explorateur identifié ;
envoyer les un ou plusieurs jetons d'accès associés au canal donné à l'explorateur ; et
recevoir (1014) au moins une notification de rappel associée au canal donné, la notification étant relative à des données dans le canal donné associé à la transaction par chaîne de blocs, lesdites données étant fournies par l'explorateur.

12. Le système d'ordinateur tel que revendiqué dans l'une ou l'autre des revendications 10 ou 11, la troisième mémoire incluant des troisièmes instructions exécutables qui, en conséquence d'exécution par le troisième processeur, amènent le processeur de canal à réaliser le procédé mis en œuvre par ordinateur suivant :
recevoir (902) une demande en provenance d'un client donné parmi les un ou plusieurs clients, la demande étant relative à la création d'un canal ;
fournir (904) au client donné l'accès à une ou plusieurs fonctions qui permettent une communication directe entre le client donné et une autre entité par l'intermédiaire du canal, lesdites une ou plusieurs fonctions incluant des fonctions ou procédures de canal relatives au canal pour transmission de données ; et/ou des fonctions ou procédures de message relatives aux données transmises en utilisant le canal ;
émettre (906) un ou plusieurs jetons d'accès pour le canal, lesdits un ou plusieurs jetons d'accès étant configurés pour une communication sécurisée avec une autre entité par l'intermédiaire du canal, et
stocker et/ou fournir (908) une ou plusieurs notifications associées au canal pour le client donné.

13. Le système d'ordinateur tel que revendiqué dans une quelconque des revendications 10 à 12, la quatrième mémoire incluant des quatrièmes instructions exécutables qui, en conséquence d'exécution par le quatrième processeur, amènent l'explorateur à réaliser le procédé mis en œuvre par ordinateur suivant :
recevoir (1102) une demande de soumettre une transaction à la chaîne de blocs en provenance du processeur de paiement ;
générer (1104) une transaction par chaîne de blocs correspondant à la demande ;
envoyer (1106) un script de sortie (UTXO) associé à la transaction par chaîne de blocs au processeur de paiement, le script de sortie incluant un identifiant de transaction (TxID) associé à la transaction par chaîne de blocs correspondante ;
recevoir (1108) l'accès à un canal, le canal permettant une communication directe avec le client donné ;
sur la base d'un jeton d'accès associé au canal, obtenir (1110) une fonction de message ou une API de message pour fournir ou écrire des données associées à une notification de rappel dans le canal, les données étant relatives à la transaction par chaîne de blocs correspondante.

14. Un support de stockage lisible par ordinateur sur lequel sont stockées des instructions exécutables qui, en conséquence de leur exécution par un processeur d'un ordinateur, amènent l'ordinateur à réaliser le procédé de l'une quelconque des revendications 1 à 8.
